(19) Europäisches Patentamt
European Patent Office
Office européen des brevets

(11) EP 2 518 744 A1

(12) **EUROPEAN PATENT APPLICATION**
published in accordance with Art. 153(4) EPC

(43) Date of publication:
**31.10.2012 Bulletin 2012/44**

(21) Application number: **10838903.2**

(22) Date of filing: **14.12.2010**

(51) Int Cl.:
***H01G 9/058*** *(2006.01)* ***C01B 31/08*** *(2006.01)*
***H01G 9/038*** *(2006.01)* ***H01M 4/587*** *(2010.01)*
***H01M 10/0525*** *(2010.01)* ***H01M 10/0568*** *(2010.01)*
***H01M 10/0569*** *(2010.01)*

(86) International application number:
**PCT/JP2010/007248**

(87) International publication number:
**WO 2011/077663 (30.06.2011 Gazette 2011/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2009 JP 2009288586**

(71) Applicant: **Panasonic Corporation**
**Kadoma-shi**
**Osaka 571-8501 (JP)**

(72) Inventors:
- **MAESHIMA, Hiroyuki**
**Osaka-shi, Osaka 540-6207 (JP)**
- **YAMADA, Chiho**
**Osaka-shi, Osaka 540-6207 (JP)**
- **SAKATA, Motohiro**
**Osaka-shi, Osaka 540-6207 (JP)**
- **SHIMAMOTO, Hideki**
**Osaka-shi, Osaka 540-6207 (JP)**

(74) Representative: **Vigand, Philippe**
**Novagraaf International SA**
**Chemin de l'Echo 3**
**1213 Onex (CH)**

(54) **ACTIVATED CARBON FOR ELECTROCHEMICAL ELEMENT AND ELECTROCHEMICAL ELEMENT USING THE SAME**

(57) Activated carbon used for an electrochemical element in which when W1 and W2 satisfy 1.0 nm ≤ W1 < W2 ≤ 2.0 nm, a total pore volume of the activated carbon in which a slit width obtained by an MP method is W1 or more and W2 or less is 15% or more of a total pore volume of the activated carbon in which the slit width obtained by the MP method is 2.0 nm or less. Furthermore, an electrode layer of the electrochemical element includes activated carbon having a large pore volume in which the slit width is W1 or more and W2 or less.

FIG. 1

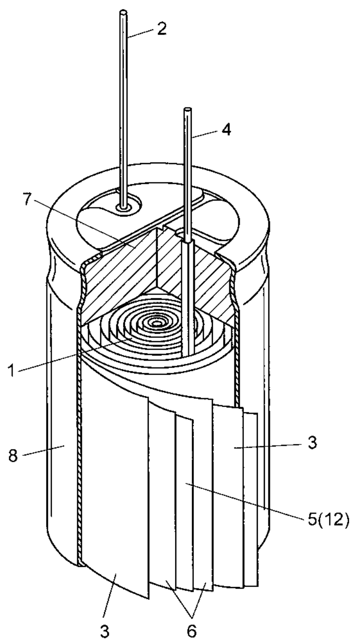


EP 2 518 744 A1

## Description

### TECHNICAL FIELD

The present invention relates to activated carbon used for an electrochemical element, which is used for various electronic apparatuses, electric apparatuses, and the like, and to an electrochemical element using the activated carbon.

### BACKGROUND ART

An electrochemical element includes an electrolytic solution, a positive electrode, and a negative electrode. At least one of the positive electrode and the negative electrode includes porous carbon material such as activated carbon. Cations or anions in the electrolytic solution adsorb and desorb on the surface of the porous carbon material. With this action, the electrochemical element converts electrical energy into chemical energy, and accumulates and supplies energy, namely, charges and discharges.

Examples of such an electrochemical element include an electric double layer capacitor. The electric double layer capacitor employs an electrolytic solution obtained by dissolving tetraethyl ammonium salt or the like in an aprotic organic solvent. Cations or anions in the electrolytic solution adsorb and desorb on the surface of porous carbon material, thereby the electric double layer capacitor can repeat charging and discharging.

On the other hand, another example of the electrochemical element is a lithium ion capacitor. A positive electrode of the lithium ion capacitor includes porous carbon material such as activated carbon, and a negative electrode thereof includes graphitic material such as graphite. The positive and negative electrodes are immersed in an electrolytic solution obtained by dissolving lithium salt in an aprotic organic solvent. On the surface of the porous carbon material of the positive electrode, lithium ions or anions in the electrolytic solution adsorb and desorb. On the graphite and the like of the negative electrode, lithium ions are stored and detached. With such an action, the lithium ion capacitor can repeat charging and discharging.

Other examples include secondary batteries and other electrochemical elements, which include combinations of various types of electrolytic solutions and various types of positive and negative electrode material and which are capable of being charged and discharged repeatedly. These electrochemical elements can be used as power source devices of various electronic apparatuses, automobiles such as electric, hybrid, and fuel cell automobiles, and other industrial apparatuses. Electrochemical elements are required to increase an energy density (energy that can be accumulated per unit weight or unit volume) and to increase a power density (output per unit weight or unit volume).

A method for achieving a large energy density of an electrochemical element includes increasing electrostatic capacitance per unit volume. For the method, some porous carbon materials have been proposed.

PTL 1 proposes porous carbon material capable of obtaining desired electrostatic capacitance by setting a total amount of pore volume at a predetermined value or more. In the pore volume, a pore diameter measured by a nitrogen adsorption method falls in a predetermined range.

PTL 2 proposes activated carbon capable of improving electrostatic capacitance by setting a total amount of pore volume at a predetermined value or more. In the pore volume, a pore diameter falls in a predetermined range. And a weight density of the total pore volume is limited in a predetermined range.

However, energy density and power density in conventional electrochemical elements are not sufficiently enhanced and leave room for improvement. In particular, performance at such a low temperature as about -30°C should be improved. Therefore, further approaches for reducing a direct current resistance (hereinafter, referred to as a "DCR") of a porous carbon material such as activated carbon are necessary.

[Citation List]

[Patent Literatures]

PTL 1: Japanese Patent Unexamined Publication No. 2007-320842
PTL 2: Japanese Patent Unexamined Publication No. 2006-286923

SUMMARY OF THE INVENTION

The present invention provides activated carbon, which satisfies the following conditions, for reducing a DCR of an electrochemical element including activated carbon and an electrolytic solution, and an electrochemical element using the activated carbon.

In the activated carbon used for an electrochemical element of the present invention, when W1 and W2 satisfy 1.0 nm ≤ W1 < W2 ≤ 2.0 nm, a total pore volume in which a slit width obtained by an MP method is W1 or more and W2 or less is 15% or more of a total pore volume in which the slit width is 2.0 nm or less. With an electrochemical element using activated carbon having pore distribution satisfying this condition, the DCR, in particular, the DCR at a low-temperature can be reduced.

## BRIEF DESCRIPTION OF THE DRAWINGS

Fig. 1 is a partially cutaway perspective view of an electric double layer capacitor as an electrochemical element in accordance with a first exemplary embodiment of the present invention.
Fig. 2A is a sectional view showing a positive electrode of the electric double layer capacitor shown in Fig. 1.
Fig. 2B is a sectional view showing a negative electrode of the electric double layer capacitor shown in Fig. 1.
Fig. 3 is a graph showing a relation between an index of the ionic conductivity determined by the molecular dynamics simulation and a slit pore width.
Fig. 4A is a view to illustrate graphene used in the electrochemical capacitor in accordance with the first exemplary embodiment of the present invention.
Fig. 4B is a view to illustrate a layered crystal of graphene shown in Fig. 4A.
Fig. 5 is a graph showing a relation between a resistance index and pore volume distribution of activated carbon of the electrochemical capacitor in accordance with the first exemplary embodiment of the present invention.
Fig. 6 is a graph showing a relation between a capacitance index and pore volume distribution of activated carbon of the electrochemical capacitor in accordance with the first exemplary embodiment of the present invention.
Fig. 7 is a graph showing a relation between an index of ionic conductivity determined by the molecular dynamics simulation and a slit pore width of a lithium ion capacitor as an electrochemical element in accordance with a second exemplary embodiment of the present invention.
Fig. 8 is an image view of a structure of solvation of a lithium ion used in the electrochemical element in accordance with the second exemplary embodiment of the present invention.
Fig. 9A is a graph showing a relation determined by the molecular dynamics simulation between types of ligand for $Li^+$ and an average value of the total number of fluorine of $PF_6^-$, oxygen of an oxo group of EC, and oxygen of an oxo group of DMC, which are present in a predetermined distance from $Li^+$ as a center when slit width L1 of the activated carbon is 3.0 nm of the electrochemical element in accordance with the second exemplary embodiment of the present invention.
Fig. 9B is a graph showing a relation when slit width L1 of the activated carbon is 2.0 nm in Fig. 9A.
Fig. 9C is a graph showing a relation when slit width L1 of the activated carbon is 1.5 nm in Fig. 9A.
Fig. 9D is a graph showing a relation when slit width L1 of the activated carbon is 1.0 nm in Fig. 9A.
Fig. 10 is a graph showing a relation between resistivity and a ratio of pore in activated carbon in the lithium ion capacitor in accordance with the second exemplary embodiment of the present invention.
Fig. 11 is a graph showing a relation of an index of the ionic conductivity obtained by the molecular dynamics simulation and the pore volume of the activated carbon with respect to a slit pore width of the lithium ion capacitor in accordance with the second exemplary embodiment of the present invention.

## DETAILED DESCRIPTION OF THE PREFERRED EMBODIMENT

Hereinafter, exemplary embodiments of the present invention are described with reference to drawings. Note here that the present invention is not limited to the below-mentioned contents.

## FIRST EXEMPLARY EMBODIMENT

In this exemplary embodiment, an electric double layer capacitor is described as an example of an electrochemical element. Fig. 1 is a partially cutaway perspective view showing a configuration of an electric double layer capacitor in accordance with a first exemplary embodiment of the present invention. The electric double layer capacitor includes case 8, capacitor element 1 accommodated in case 8, and lead wires 2 and 4 connected to capacitor element 1.
Capacitor element 1 includes positive electrode 3, negative electrode 5, and separator 6. Positive electrode 3 is connected to lead wire 2. Negative electrode 5 is connected to lead wire 4. Separator 6 is disposed between positive electrode 3 and negative electrode 5. Separator 6 is made of an insulating porous member, and prevents short circuit between positive electrode 3 and negative electrode 5. Positive electrode 3 and negative electrode 5 are accommodated in case 8 in a state in which positive electrode 3 and negative electrode 5 face each other and are wound with separator

6 interposed therebetween.

Rubber sealing member 7 has holes into which lead wires 2 and 4 are inserted, respectively, and is fitted into an upper end portion of case 8. Case 8 is made of metal, and has a cylindrical shape having a bottom and an opening. The opening of case 8 is subjected to drawing processing and curling processing so as to compress sealing member 7, and thus the opening of case 8 is sealed. In this way, an electric double layer capacitor is produced.

Fig. 2A is a sectional view of positive electrode 3. Electrode 3 includes first current collector (hereinafter, referred to as "current collector") 3A made of metal foil such as aluminum foil, and first polarizable electrode layers (hereinafter, referred to as "electrode layers") 3B provided on surfaces 103A of current collector 3A. Surface 103A is roughened by, for example, etching with an electrolytic solution. Electrode layer 3B is mainly made of activated carbon.

Electrode layer 3B is impregnated with electrolytic solution 9. As electrolytic solution 9, a solution obtained by dissolving amidine salt in an aprotic polar solvent such as propylene carbonate can be used. An example is 1 M (=1 mol/ml) electrolytic solution obtained by dissolving salt of 1-ethyl-2,3-dimethyl imidazolium ($EDMI^+$) and tetrafluoroborate ($BF_4^-$) in a mixed solvent of propylene carbonate (PC) and dimethyl carbonate (DMC) that are mixed with the weight ratio of 7 : 3. However, electrolytic solution 9 is not necessarily limited to this.

As a cation of an electrolyte that can be used in the electrolytic solution, one type of cation or a combination of a plurality of types of cations represented by the following chemical formula (Chem. 1) can be used. $EDMI^+$ is one cation of this type. The electrolytic solution including such a cation has a property that a withstand voltage is high and a decomposition reaction on the electrode surface does not easily occur as described in, for example, Japanese Patent Unexamined Publication No. 2005-197666. Therefore, it is preferable because the energy density of an electrochemical element can be improved, and the deterioration of performance over time can be suppressed.

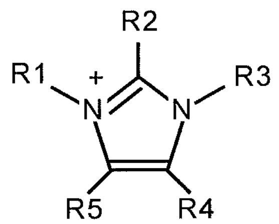

(1)

(in the chemical formula, each occurrence of R1, R2, R3, R4, and R5 represents independently a hydrogen atom or an alkyl group containing 1 to 10 carbon atoms, any of R1 to R5 may be the same, and carbon atoms contained in R1 to R5 may bond together to form a cyclic structure).

As an anion of an electrolyte that can be used in the electrolytic solution, hexafluorophosphate can be used instead of $BF_4^-$. Alternatively, a combination with $BF_4^-$ may be used. The electrolytic solution including such an anion also has a property that a withstand voltage is high and a decomposition reaction on the electrode surface does not easily occur as described in, for example, Japanese Patent Unexamined Publication No. 2005-197666. Therefore, it is preferable because the energy density of an electrochemical element can be improved, and the deterioration of performance over time can be suppressed. However, electrolytic solution 9 used in the electric double layer capacitor is not necessarily limited to the above-mentioned example, and various chemical species and compositions can be employed.

Fig. 2B is a sectional view of negative electrode 5. Electrode 5 includes second current collector (hereinafter, referred to as "current collector") 5A made of aluminum foil, and second polarizable electrode layers (hereinafter, referred to as "electrode layer") 5B provided on surfaces 105A of current collector 5A. Surface 105A is roughened by, for example, etching with an electrolytic solution. Electrode layer 5B includes activated carbon having an acidic surface functional group. Similar to electrode layer 3B, electrode layer 5B is impregnated with electrolytic solution 9.

Note here that electrode layers 3B and 5B may be subjected to press working. Thereby, the surface roughness of electrode layers 3B and 5B is reduced and the electrode density is increased.

The following are descriptions of a production method of activated carbon that can be used in electrode layers 3B and 5B, and measurement methods of a specific surface area and pore distribution thereof. Examples of carbonaceous material as raw material of the activated carbon contained in electrode layers 3B and 5B may include hardly-graphitizable carbon (referred to as "hard carbon"), easily-graphitizable carbon, and mixtures thereof. Examples of the hard carbon may include woods, sawdust, charcoal, coconut husk, cellulosic fiber, and synthetic resin (for example, phenol resin). Examples of the easily-graphitizable carbon may include coke (for example, pitch coke, needle coke, petroleum coke, and coal coke), pitch (for example, a mesophase pitch), polyvinyl chloride, polyimide, and polyacrylonitrile (PAN).

If necessary, carbonaceous material carbonized before activation process is used as activated carbon raw material. In the activation process, pores are formed on the surface of the carbonaceous material so as to increase the specific surface area and a pore volume. Examples of the known processes include gas activation of manufacturing

activated carbon by heating a carbonaceous material in coexistence of gas, and chemical activation of manufacturing activated carbon by heating a mixture of an activation agent and a carbonaceous material. By the process arbitrarily selected from the well-known processes, activated carbon can be manufactured. A specific method of the activation process is disclosed in, for example, Japanese Patent Unexamined Publication No. 2008-147283.

For measurement of the specific surface area and the pore distribution of activated carbon, BELSORP 28SA device available from BEL JAPAN is used. The pore diameter distribution is analyzed by using an MP method (R. SH. MICHAIL et al., J. Coll. Inter. Sci., 26 (1968) 45). In the MP method, a pore assumes to have a slit shape, and the total volume of pores having the slit width is calculated as a function of the slit width.

The following is a description of optimization conditions for the pore distribution of activated carbon to reduce a DCR of an electric double layer capacitor. Optimum conditions for the pore diameter distribution of activated carbon are thought to be different depending upon the compositions of the electrolytic solution to be combined. Therefore, a method of determining the pore diameter distribution of activated carbon from the structure and the size of the ion and the solvent contained in the electrolytic solution is described.

In general, the size of a molecule (including an ion) can be represented by a diameter (van der Waals molecular diameter) of a sphere having the same volume as the volume occupied by the van der Waals spheres of the atoms constituting the molecule and the like. Furthermore, the molecule formed by the overlap of the van der Waals spheres of the atoms may take various shapes other than a sphere. As a reference of the size of such a molecule, the maximum value of the distance between two parallel planes that sandwich the molecule, that is, the maximum width of the molecule (the maximum van der Waals width) can be employed.

In the viewpoint of the molecular size as mentioned above, a method for reducing the DCR of an electrochemical capacitor is considered. Herein, two different conditions are considered. The first condition is that the interaction between an ion and a solvent molecule is relatively weak, and solvated ions can be desolvated; and the second condition is that the interaction between an ion and a solvent molecule is relatively strong, and solvated ions are difficult to be desolvated.

This exemplary embodiment mainly relates to the first condition, namely, the case in which the interaction between an ion and a solvent molecule is relatively weak, and solvated ions can be desolvated. Electrolytic solution 9 of the electric double layer capacitor in accordance with this exemplary embodiment applies to this condition.

The DCR due to the ion conduction in the pore of activated carbon is thought to be dependent upon the diffusion rate of an ion in the pore. An ion in the slit-shaped pore is pressed and deformed by the repulsive power from two walls of the pore according to the reduction of the pore diameter, i.e., the slit width. As a result, the orientation and the structure of an ion in the pore are changed in such a manner that a projected area to the plane parallel to the pore wall is increased. In such a case, considering the diffusion of the ion to the direction parallel to the pore wall, a cross-sectional area for hitting of the ion is increased, and therefore the diffusion rate is reduced and the DCR is increased.

From such a viewpoint, in order to prevent the reduction of the ionic conductivity, the pore diameter of activated carbon needs to be not less than a predetermined size that does not cause a forcible change of the orientation and the structure of the ion. This predetermined value is thought to be the van der Waals diameter or the maximum van der Waals width of the ion.

On the other hand, ions are stabilized by forming an ion associate of a cation and an anion or a solvated cluster of ions (hereinafter, referred to as a "solvated ion") in an electrolytic solution. However, the interaction between the central ion and ligand in the ion associate or the solvated ion deteriorates the ionic conductivity. This is because the ion associate of a cation and an anion is electrically neutral, and ions forming the associate do not contribute to the ionic conductivity. Furthermore, the solvated ion has larger effective molecular weight as compared with a single ion, and the diffusion rate is lowered and the ionic conductivity is reduced.

When a pore of activated carbon is small such that an ion associate or a solvated ion cannot be formed, ions in the pore are not subjected to the interaction with a ligand and are diffused along the pore wall without taking in a counter ion or a solvent. Therefore, the ion diffusion rate tends to be larger than the case in which the ion associate or the solvated ion is formed.

From such a viewpoint, in order to improve the ionic conductivity, the pore diameter of activated carbon is required to be not larger than a predetermined size that does not allow ions to form an ion associate or a solvated ion. This predetermined value is thought to be the van der Waals diameter or the maximum van der Waals width of an associate (dimer) of a cation and an anion, or an associate (dimer) of a cation or an anion and a solvent.

On the contrary, unlike the first condition, the second condition requires that it is difficult to desolvate the solvated ions. Therefore, unlike the first condition, the upper limit of the pore diameter of activated carbon for improving the ionic conductivity cannot be determined to be a predetermined value that does not allow ions to form an ion associate or a solvated ion of cations and anions. In this case, as a matter of form, the upper limit of the pore diameter can be determined to be 2.0 nm, that is, the upper limit of the subject pore diameter distribution.

On the other hand, when the pore of the activated carbon is small such that an aggregation structure in a bulk electrolytic solution of a solvated ion cannot be maintained, the solvated ion in the pore diffuses along the pore wall without being interacted with the surrounding solvent molecules or the like, the diffusion rate of the solvated ion tends

to be larger than that in the pore having a large bulk and a diameter. According to a result of the analysis of the diffusion of an ion in the pore, it is confirmed that the pore in which a slit width obtained by an MP method is more than 2.0 nm is disadvantageous in improving the ionic conductivity. Therefore, it is reasonable that the upper limit of the pore diameter is determined to be 2.0 nm.

As to the diffusion of an ion in the pore as described above, the verification result by the molecular dynamics simulation is shown later.

In the above, as to each of the first and second conditions, a basic idea for improving the ionic conductivity is described. In any conditions, the most basic and important thing is that the ionic conductivity has a maximal value with respect to the slit width, and that it is effective that the slit width is distributed in a certain range around this maximal value as a center in order to improve the ionic conductivity.

This predetermined range can be determined to be W1 or more and W2 or less when W1 and W2 satisfy $Wmin \leq W1 < W2 \leq Wmax$. Wmin is the possible lower limit of W1. Wmax is the possible upper limit of W2. Wmax can be made to be 2.0 nm as mentioned above.

When the ion radius of a lithium ion ($Li^+$) is defined as a radius of a sphere having the same volume as that of a region whose electric density in the first principle molecular orbital calculation (HF/6-31G(d)) is 0.001 (au) or more, it is evaluated as 0.943 Å. Therefore, in order that $Li^+$ can enter into the pore of the activated carbon singly and freely, the slit width obtained by the MP method needs to be 0.2 nm ($\cong 2 \times 0.943$ Å) or more. Since it is difficult for proton to be present as an isolated ion in electrolyte solutions, $Li^+$ can be considered to have the minimum size as a single ion. Therefore, Wmin can be set to 0.2 nm in any cases.

Furthermore, according to the result of the analysis of ion diffusion in the pore, it is confirmed that the pore of which the slit width obtained by the MP method is less than 1.0 nm is disadvantageous for improving the ionic conductivity. Therefore, more desirably, it is preferable that Wmin is 1.0 nm.

Based on the above-mentioned view, a method for reducing the DCR of the electrochemical element of the present invention can be given as follows.

In the case of the first condition, the Van der Waals molecular diameters of a cation, an anion, and a solvent contained in electrolytic solution 9 are denoted by Lc, La, and Ls, respectively. The maximum widths of the van der Waals molecules of the cation, the anion, and the solvent are denoted by Lmax(c), Lmax(a), and Lmax(s), respectively. The maximum value among Lc, La, Ls, Lmax(c), Lmax(a), and Lmax(s) is denoted by W1. The minimum value among (Lc + La), (Lc + Ls), (La +Ls), (Lmax(c) + Lmax(a)), (Lmax(c) + Lmin(s)), and (Lmax(a) + Lmax(s)) is denoted by W2. With those denotations, in order to reduce the DCR, the total pore volume of activated carbon in which a slit width obtained by an MP method is W1 or more and W2 or less needs to amount to a predetermined value or more.

In order to reduce the DCR, W 1 and W2 determined as mentioned above satisfy $1.0 \text{ nm} \leq W1 < W2 \leq 2.0 \text{ nm}$, and the total pore volume in which the slit width is W1 or more and W2 or less needs to be a predetermined value or more.

Activated carbon has a large surface area because it includes pores called micro-pores which have a diameter of mainly 2.0 nm or less and which are extremely grown three-dimensionally. The distribution of the slit widths of the pores of activated carbon is mainly in 2.0 nm or less. Pores having a slit width of more than 2.0 nm hardly contribute to the DCR. Therefore, in order to reduce the DCR, it is more preferable that a larger number of pores, which have a slit width of 2.0 nm or less and which does not prevent the diffusion of an ion, are included in the pores. Specifically, as mentioned above, the total pore volume in which the slit width is W1 or more and W2 or less needs to be 15% or more. This ratio does not have an upper limit, and may be 100% as mentioned below.

The following is a detailed description of the optimization conditions for the pore distribution of activated carbon, which is obtained by applying the above-mentioned method to the assumable electrolytic solution, the verification result by the molecular dynamics simulation, and the measurement results of the DCR of the electrochemical element in the electric double layer capacitor in this exemplary embodiment.

Firstly, the optimization conditions of the pore distribution of the activated carbon to be used in the electric double layer capacitor in this exemplary embodiment are described with reference to specific examples. In one example, in electrolytic solution 9, 1-ethyl-2,3-dimethyl imidazolium ($EDMI^+$) is used as a cation. Tetrafluoroborate ($BF_4^-$) is used as an anion. Propylene carbonate (PC) or a mixture solvent of PC and dimethyl carbonate (DMC) is used as a solvent.

Table 1 shows various parameters of $EDMI^+$, $BF_4^-$, PC, and DMC, respectively. Specifically, Table 1 shows the van der Waals volume (Vvdw), the van der Waals radius (Rvdw), the maximum width of van der Waals molecule (Dmax), and a radius (Rqm) of a sphere having the same volume as that of a region whose electric density in a stable structure by the first principle molecular orbital calculation (HF/6-31G(d)) is 0.001 (au) or more. Vvdw is calculated by placing the van der Waals sphere in the central position of each atom in an ion and a molecule in the stable structure by HF/6-31G(d) and by integrating the volume occupied by the van der Waals sphere.

The first principle molecular orbital calculation is carried out by using program Gaussian03 (Gaussian Inc.), and the van der Waals radius of hydrogen (H) is 1.20 Å, that of carbon (C) is 1.70 Å, that of nitrogen (N) is 1.55 Å, that of fluorine (F) is 1.47 Å, and that of boron (B) is 1.70 Å. The values of H, C, N, and F are cited from the values of Bondi (A. Bondi, J. Phys. Chem., 68(1964) 441). The value of B is the same as the value of C, but, in $BF_4^-$, B constituting $BF_4^-$

is surrounded by four fluorines F and the ion volume of $BF_4^-$ is not sensitive to the value of boron B. Furthermore, in all ions and molecules, the values of Rvdw and Rqm are in excellent agreement with each other.

Table 1

| | Vvdw ($nm^3 \times 10^{-3}$) | Rvdw ($nm \times 10^{-1}$) | Rmin ($nm \times 10^{-1}$) | Rqm ($nm \times 10^{-1}$) |
|---|---|---|---|---|
| $EDMI^+$ | 182.86 | 3.52 | 5.12 | 3.43 |
| $BF_4^-$ | 67.20 | 2.52 | 4.55 | 2.35 |
| PC | 108.13 | 2.96 | 4.97 | 3.05 |
| DMC | 124.97 | 3.10 | 4.03 | 2.94 |

The van der Waals molecular diameters (Rvdw × 2) of a cation, an anion, and a solvent in Table 1 are denoted by Lc, La, and Ls, respectively. The maximum widths of the van der Waals molecules (Dmax) of the cation, the anion, and the solvent are denoted by Lmax(c), Lmax(a), and Lmax(s), respectively. The maximum value among Lc, La, Ls, Lmax(c), Lmax(a), and Lmax(s) is denoted by W1. The minimum value among (Lc + La), (Lc + Ls), (La +Ls), (Lmax(c) + Lmax(a)), (Lmax(c) + Lmin(s)), and (Lmax(a) + Lmax(s)) is denoted by W2. Herein, since two types of solvents, PC and DMC, are present, Ls and Lmin(s) with respect to each solvent, namely, Ls (PC), Ls (DMC), Lmin(s) (PC), and Lmin (s) (DMC) are considered. Then, W1 and W2 are determined for all the values by the above-mentioned method.

As a result, W1 is Lmax(c) of $EDMI^+$, and W1 = Lmax(c) = 9.84 Å ≅ 1.0 nm is satisfied. Furthermore, W2 is determined by La of $BF_4^-$ and Ls (PC) of PC, and W2 = La + Ls (PC) = 10.96 Å ≅ 1.1 nm is satisfied. Note here that in this example, since DMC is not involved in the determination of W1 and W2, the same results are obtained regardless of whether a PC solvent is assumed to be used or a mixture solvent of PC and DMC is assumed to be a solvent.

Therefore, in this example, the total pore volume in which the slit width obtained by the MP method is 1.0 nm or more and 1.1 nm or less needs to be 15% or more of the total pore volume in which the slit width is 2.0 nm or less. By using activated carbon having pore distribution that satisfies this condition, the DCR can be reduced.

(Verification 1 by Simulation)

Next, a method of analysis of the ionic conductivity in slit pores of activated carbon by using molecular dynamics simulation (hereinafter, referred to as "MD simulation") and the result thereof are described.

In the simulation, the following condition is applied. Total 256 particles including 20 particles of $EDMI^+$, 20 particles of $BF_4^-$, and 216 particles of PC are provided in a unit cell in such a manner that the particles are contained between two parallel slit walls. Under the periodic boundary condition, the diffusion of an ion to the direction parallel to the slit walls is analyzed. Hereinafter, the specific method thereof is described.

For bonding potential (bond stretching, angle bending, dihedral rotation) and non-bonding potential (Van der Waals potential) between atoms, an AMBER type force field function (W. D. Cornell, P. Cieplak, C. I. Bayly, I. R. Gould, K. M. Merz Jr., D. M. Ferguson, D. C. Spellmeyer, T. Fox, J. W. Caldwell, and P. A. Kollman, J. Am. Chem. Soc., 117 (1995) 5179) is applied. Electrostatic potential between atoms is evaluated by the Ewald method by applying a restrained electrostatic potential (RESP) electric charge (C. I. Bayly, P. Cieplak, W. D. Cornell, and P. A. Kollman, J. Phys. Chem., 97 (1993) 1026), which is determined by the first principle molecular orbital calculation HF/6-31G(d) as an atomic charge.

A slit wall is assumed to have graphite type Steel potential (W. A. Steele, Surface Science, 36 (1973) 317). Furthermore, surface polarization excited by the electric charge of electrolytic solution particles is approximated by using the mirror image charge of the atomic charge.

In such an assumption, an MD simulation is carried out under the condition of a temperature of 298 K and a pressure of 1 atm. Change over time of barycentric coordinates of ions in the resultant equilibrium state is recorded as a trajectory of 60000 points, 6 ns for each 0.1 ps. These data are used for analysis of the diffusion of an ion.

The ionic conductivity can be evaluated by mathematical formula 1 (Math. 1) based on the linear response theory (R. Kubo, J. Phys. Soc. Jpn., 12 (1957) 570).

$$6tVk_B T\lambda / e^2 = \langle \sum_{i,j}^{N} z_i z_j [R_i(t) - R_i(0)][R_j(t) - R_j(0)] \rangle_{eq} \quad \text{[Math. 1]}$$

wherein λ denotes conductivity, V denotes a volume, t denotes a time, $K_B$ denotes a Boltzman's constant, T denotes a temperature, N denotes a number of particles; $Z_i$ and $Z_j$ denote charge number of the i-th and j-th particles, respectively; $R_i$ and $R_j$ denote center of mass coordinates of the i-th and j-th particles respectively; and $<...>_{eq}$ denotes an average.

Furthermore, Einstein relation (Math. 2) for the ion diffusion can be also applied.

$$6tVk_BT\lambda / e^2 = \langle \sum_i^N z_i^2 [R_i(t) - R_i(0)]^2 \rangle_{eq} \qquad \text{[Math. 2]}$$

wherein λ denotes conductivity, V denotes a volume, t denotes a time, $K_B$ denotes a Boltzman's constant, T denotes a temperature, N denotes a number of particles; $Z_i$ denote charge number of the i-th particle; $R_i$ denotes a center of mass coordinates of the i-th particle; and $<...>_{eq}$ denotes an average.

Math. 1 is obtained by generalizing Math. 2. Math. 1 includes the cross-correlation function and Math. 2 includes the auto-correlation function in the respective right hands. Math. 1 cannot evaluate the diffusion coefficient of a cation and an anion separately, but can evaluate the ionic conductivity of a system having a strong interaction between ions with high accuracy.

Table 2 and Fig. 3 show the analysis results of the conductivity. Table 2 shows analysis results of the slit widths L1 and L2 of the activated carbon calculated by the above-mentioned simulation and the conductivity of the electrolytic solution according to the slit widths. Herein, A (Total) signifies a time-derivative value of the right hand of Math. 1. A ($EDMI^+$) and A ($BF_4^-$) signify time derivative values of the sum of the terms satisfying i = j belonging to $EDMI^+$ and $BF_4^-$ respectively among the sum of the right hand in Math. 1, and they are the same as those of the time derivative values of $EDMI^+$ and $BF_4^-$ in the right hand of Math. 2. A represents TD-CMSD (Time Derivative of Collective Mean Square Displacement). Since TD-CMSD is in proportion to conductivity λ, it is an index for evaluating the size of the conductivity. Furthermore, Fig. 3 is a graph showing a relation between TD-CMSD and the inverse number of L1 of each electrolytic solution material.

Table 2

| slit width L1 (nm) | slit width L2 (nm) | 1/L1 ($nm^{-1}$) | Λ(Total) ($nm^2$/psec × $10^{-2}$) | Λ($EDMI^+$) ($nm^2$/psec ×$10^{-2}$) | Λ($BF_4^-$) ($nm^2$/psec ×$10^{-2}$) |
|---|---|---|---|---|---|
| 2.00 | 1.62 | 0.50 | 1.354 | 1.148 | 1.360 |
| 1.50 | 1.12 | 0.67 | 3.517 | 4.381 | 4.452 |
| 1.25 | 0.87 | 0.80 | 2.110 | 2.998 | 3.449 |
| 1.00 | 0.62 | 1.00 | 0.819 | 1.960 | 1.812 |

In Table 2, slit width L1 is a distance between the two slit planes (planes in which a center of carbon atoms constituting the slit wall is present), and slit width L2 is a value obtained by subtracting the van der Waals diameter (0.3816 nm) of carbon used in Steel potential from L1, and corresponds to a slit width determined by the measurement of the pore distribution by the MP method. Fig. 3 shows a plot of the change of TD-CMSD with respect to 1/L1, and shows a value of L2 corresponding to each plot.

A ($EDMI^+$) and A ($BF_4^-$) correspond to diffusion coefficients of ions. In a dilute electrolytic solution, the sum of A ($EDMI^+$) and A ($BF_4^-$) affects the ionic conductivity of an electrolytic solution. However, since the interaction between ions becomes strong when the concentration of the electrolytic solution is a predetermined concentration or higher, A (Total) is required to be considered. In the results of Table 2 and Fig. 3, A (Total) is smaller than the sum of A ($EDMI^+$) and A ($BF_4^-$). This means that a cation-anion associate is formed by the interaction between ions, thereby reducing the ionic conductivity of an electrolytic solution.

Table 2 and Fig. 3 show that the ionic conductivity in the slit pore becomes a maximum when slit width L2 obtained by the MP method is in the range of 1.0 nm to 1.1 nm and in its vicinity. The optimum range of the slit width agrees with the above-mentioned optimum range.

Thus, the ionic conductivity has a maximum value as a function of the slit width. $EDMI^+ BF_4^-$ / PC has a maximum when the slit width is in the range of 1.0 nm to 1.1 nm and in its vicinity. The lower limit and the upper limit of the slit width agree with the values (W1 and W2) determined from the structure and the size of the ions and the solvent molecule constituting the electrolytic solution.

The electrochemical element is required to reduce the DCR and to increase electrostatic capacitance. Next, electrostatic capacitance of an electrochemical element in this exemplary embodiment is considered.

The electrostatic capacitance created by ion adsorption to the pore wall of activated carbon is thought to be dependent on the amount of ions that can be taken in the pore of the activated carbon and the distance between the ion and the pore wall. Therefore, as the amount of ions to be taken into the pore is increased, the electrostatic capacitance may be increased. Furthermore, as the distance between the ion in the pore and the pore wall is smaller, the distance

between the electric charge of the ion and the inverse charge of the ion polarized on the pore wall is reduced. Therefore, the electrostatic capacitance of the electric double layer made by the pair charge is increased.

Since the ion associate of a cation and an anion is electrically neutral, the ion associate does not contribute to the electrostatic capacitance even when the ion associate is adsorbed on the pore wall. Furthermore, since the ion radius of the solvated ion is larger than that of a single ion, when the solvated ion is adsorbed on the pore wall via a solvent molecule, the distance between the ion and the pore wall is increased, and thus the electrostatic capacitance becomes smaller than that of a single ion.

From such a viewpoint, in order to increase the electrostatic capacitance, the pore diameter of activated carbon is required to have a size that is not larger than a predetermined size that does not allow ions to form an ion associate or a solvated ion. This predetermined value is thought to be the van der Waals diameter or the maximum van der Waals width of an associate (dimer) of a cation and an anion, or an associate (dimer) of a cation or an anion and a solvent.

Therefore, in order to increase the electrostatic capacitance, it is desirable that the total pore volume of activated carbon in which a slit width obtained by the MP method is W2 or less is a predetermined value or more. Specifically, it is desirable that the total pore volume is 0.9 ml/g or more.

When the above-mentioned $EDMI^+ BF_4^-$ / (PC + DMC) is used as an electrolytic solution, W2 is determined by La of $BF_4^-$ and Ls (PC) of PC, and W2 = La + Ls (PC) = 10.96 Å ≅ 1.1 nm is satisfied. Therefore, when this electrolytic solution is used, in order to increase the electrostatic capacitance, the total pore volume in which the slit width obtained by the MP method is 1.1 nm or less needs to be 0.9 ml/g or more.

Therefore, in addition to the above-mentioned conditions, it is preferable to use activated carbon having the total pore volume in which the slit width obtained by the MP method is 1.0 nm or more and 1.1 nm or less is 15% or more of the total pore volume in which the slit width is 2.0 nm or less. This makes it possible to reduce the DCR and to increase the electrostatic capacitance. To be generalized, it is desirable that the total pore volume of activated carbon in which a slit width obtained by the MP method is W1 or more and W2 or less is not less than a predetermined ratio with respect to the total pore volume in which the slit width is 2.0 nm or less, and that the total pore volume of activated carbon in which the slit width obtained by the MP method is W2 or less is a predetermined value or more.

The larger the total pore volume satisfying these conditions is, the more desirable. However, the total pore volume has an upper limit. Hereinafter, the upper limit is described.

With respect to the condition that the total pore volume in which the slit width obtained by the MP method is 1.0 nm or more and 1.1 nm or less is 15% or more of the total pore volume in which the slit width is 2.0 nm or less, the upper limit of the total pore volume satisfying the condition is naturally 100%. Actually, however, from the present general manufacturing technologies of activated carbon or economical efficiency such as a manufacturing cost, it is not easy to suppress the variation from a predetermined range of the distribution of the slit width. Therefore, the upper limit is thought to be less than 100%. However, since the present invention provides optimum designing conditions of the pore of activated carbon, it does not additionally set the upper limit of other than 100%.

With respect to the condition that the total pore volume in which the slit width obtained by the MP method is 1.1 nm or less is 0.9 ml/g or more, the upper limit of the total pore volume satisfying this condition is limited by a structure of the slit of activated carbon. The upper limit is determined as follows.

Assuming a slit formed of a plurality of parallel graphenes, and the graphene is one hexagon plane of graphite. The pore volume density made by a predetermined amount of graphenes is increased as the interval of the graphenes, that is, the slit width, is increased. However, according to the conditions of the present invention, the slit width is limited to 1.1 nm or less, measured on the basis of the MP method. Therefore, the pore volume density has a maximum value when the slit width agrees with 1.1 nm measured on the basis of the MP method.

Length L1 between two graphenes corresponds to a value obtained by adding the van der Waals diameter of carbon (0.3816 nm) to slit width L2 measured on the basis of the MP method. Therefore, when L2 is 1.1 nm, L1 becomes 1.4816 nm.

Fig. 4A is a schematic view of unit cell Sg of graphene of activated carbon to be used in this exemplary embodiment. A portion surrounded by a thick broken line shows unit cell Sg. Unit cell Sg has two carbon atoms, and has an area of 0.05246 $nm^2$. Fig. 4B is a schematic view showing unit cell Vg of a graphene layered crystal (shown by a thick broken line) formed by laminating graphenes shown in Fig. 4A at an interval of L1 = 1.4816 nm. Unit cell Vg has two carbon atoms, and has a volume of 0.07772 $nm^3$. This graphene crystal has a slit structure having the maximum pore volume density.

Thus, the slit volume contained in the unit cell of the graphene layered crystal shown in Fig. 4B is 0.05771 (= Sg × 1.1) $nm^3$, and the pore volume density of this slit structure is $1.43174 \times 10^{-25}$ (= 0.05771 /(2 × 12.0107 / (6.0221367 × $10^{23}$))) $nm^3$/g, i.e., 1.43174 ml/g. Herein, the atomic weight of carbon is 12.0107, and the Avogadro's number is $6.0221367 \times 10^{23}$. That is to say, the activated carbon of this exemplary embodiment satisfies the condition that the total pore volume in which the slit width obtained by the MP method is 1.1 nm or less is 0.9 ml/g or more, and the upper limit of the total pore volume satisfying the condition is not particularly specified but it is 1.43174 ml/g. Thus, the pore volume density is necessarily limited by a structure of the activated carbon.

The activated carbon of the exemplary embodiment does not limit a manufacturing process or raw material, and means a porous conductive material characterized by the pore distribution obtained by the MP method. Generally called porous carbon material may be used. At present, however, from the viewpoint of manufacturing cost and the like, it is thought to be valuable to industrially use activated carbon.

(Performance Evaluation Test 1)

Next, a measurement method of a DCR of an electric double layer capacitor in this exemplary embodiment and results are described.
As the electric double layer capacitor of this exemplary embodiment, a case in which an $EDMI^+BF_4^-$ electrolytic solution is used is described. Table 3 shows parameters of sample X and samples A to D of all the activated carbon used in this exemplary embodiment. Herein, a pore volume in which a slit width is 2.0 nm or less, that is, a total pore volume, is defined as pore volume A (ml/g). A slit width when the pore volume is maximum is defined as a peak pore diameter (nm). The pore volume in which the slit width is 1.0 to 1.1 nm is defined as pore volume B (ml/g). The pore volume in which the slit width is 1.1 nm or less is defined as pore volume C (ml/g). Table 3 shows average particle diameter D50 (μm) and the total surface area ($m^2/g$) in addition to the above.

Table 3

| | X | A | B | C | D |
|---|---|---|---|---|---|
| average particle diameter D50(μm) | 3.9 | 3.7 | 3.3 | 5.3 | 3.0 |
| total surface area ($m^2/g$) | 2197 | 2037 | 2049 | 2194 | 2481 |
| total pore volume A (ml/g) | 1.06 | 1.10 | 1.16 | 1.15 | 0.98 |
| peak pore diameter (nm) | 0.9 | 0.9 | 0.9 | 0.9 | 0.8 |
| pore volume B (ml/g) | 0.105 | 0.232 | 0.266 | 0.182 | 0.024 |
| B/A (%) | 9.9 | 21.1 | 22.9 | 15.9 | 2.5 |
| pore volume C (ml/g) | 0.896 | 0.810 | 0.751 | 0.905 | 0.910 |
| C/A (%) | 84.53 | 73.64 | 64.74 | 78.7 | 92.86 |

Next, a production method of positive electrode 3 and negative electrode 5 to be used in measurement is described. Firstly, commercially available carboxymethylcellulose (CMC) as a water soluble binder and acetylene black are mixed to the activated carbon shown in Table 3. At this time, the mass ratio of activated carbon : CMC : acetylene black is set at 8 : 1 : 1. This mixture is formed into paste. The prepared paste is applied to aluminum foil as current collector 3A or 5A, respectively, which is dried so as to form a sheet-like electrode body. Furthermore, this electrode body is subjected to press working so as to form electrode layer 3B or 5B. The pressed electrode body is cut into a predetermined dimension. A part of electrode layers 3B and 5B provided on the end portion of the electrode layer is peeled off, and lead wires 2 and 4 are connected to current collectors 3A and 5A, respectively. Thus, positive electrode 3 and negative electrode 5 are completed.
By using the thus produced positive electrode 3 and negative electrode 5, an electric double layer capacitor having a diameter of 18 mm and a height of 50 mm is assembled. At this time, an electrolytic solution having a concentration of 1 M obtained by dissolving salts of $EDMI^+$ and $BF_4^-$ in a mixed solvent of PC and DMC that are mixed with the weight ratio of 7 : 3 is used as electrolytic solution 9.
Average particle diameter D50 of the above-mentioned activated carbon is distributed from 3.0 μm to 5.3 μm. When positive electrode 3 and negative electrode 5 are produced by using activated carbon having a small average particle diameter (less than 1 μm), a contact point between the activated carbon particles and the binder tends to be reduced. Therefore, in order to maintain the strength and the flexibility of the polarizable electrode, it is necessary to increase the mass ratio of the binder. In this case, the ratio of the activated carbon contained in the polarizable electrode is reduced, and a volume capacity density as an electrode body is reduced. Therefore, it is preferable that the average particle diameter of the activated carbon is 1 μm or more.
In order to measure the DCR and the electrostatic capacitance of the electric double layer capacitor in this exemplary embodiment, the following electric evaluation is carried out.
The electric double layer capacitor is charged with a constant current of 1.5A and at a constant voltage of 2.8 V, and then the DCR and the electrostatic capacitance (initial discharge capacity) are measured while being discharged with a constant current of 1.35 A. The DCR is determined from the voltage drop after the start of discharge. That is to

say, the voltage gradient is derived from each measurement voltage during 0.5 to 2.0 seconds after the start of discharge, a voltage at the time of the start of the discharge is determined from this voltage gradient, and the voltage difference between this voltage and the charging voltage (2.8 V) is measured. The direct current resistivity (Ω·m) of a capacitor is calculated from the voltage difference, discharge current, a thickness of the electrode layer, and an area of the electrode layer.

The electrostatic capacitance is determined from a discharge curve between 2.24 V to 1.12 V, and volume electrostatic capacitance (F/$cm^3$) is calculated by dividing the electrostatic capacitance by the total volume of the electrode layer in the electrode.

Table 4 shows the direct current resistivity (Ω·m) and the volume electrostatic capacitance (F/$cm^3$) at -30°C, calculated by the above-mentioned method. In addition, Fig. 5 shows results of plotting a resistance index that is a value normalized by the direct resistivity of sample X with respect to the ratio obtained by dividing pore volume B having a slit width of 1.0 to 1.1 nm by total pore volume A. Fig. 6 shows results of plotting a capacitance index that is a value normalized by volume electrostatic capacitance of sample X with respect to pore volume C that is a volume of pores having a slit width of 1.1 nm or less. Furthermore, the initial properties of these values and the properties after a voltage of 2.8 V is applied at 60°C for 600 hours (after test) are shown.

Table 4

| | | X | A | B | C | D |
|---|---|---|---|---|---|---|
| initial properties | direct current resistivity (Ω·m) | 18.1 | 14.5 | 12.7 | 15.2 | 21.1 |
| | resistance index | 1.00 | 0.80 | 0.70 | 0.84 | 1.17 |
| | volume electrostatic capacitance (F/$cm^3$) | 16.6 | 15.5 | 14.3 | 18.5 | 21.1 |
| | capacitance index | 1.00 | 0.94 | 0.86 | 1.12 | 1.27 |
| properties after test | direct current resistivity (Ω·m) | 39.7 | 24.5 | 18.9 | 25.6 | 77.2 |
| | resistance index | 1.00 | 0.62 | 0.48 | 0.64 | 1.94 |
| | volume electrostatic capacitance (F/$cm^3$) | 13.7 | 13.2 | 13.4 | 15.3 | 15.7 |
| | capacitance index | 1.00 | 0.96 | 0.98 | 1.12 | 1.15 |

As shown in Table 3 and Fig. 5, in samples A, B and C, the ratio of pore volume B with respect to pore volume A is 15% or more. In these cases, as shown in Table 4 and Fig. 5, it is shown that the resistance index is less than 1.0, and the resistance is low even at low temperatures. This tendency is particularly remarkable in the result obtained after a voltage of 2.8 V is applied at 60°C for 600 hours. When the ratio of pore volume B with respect to pore volume A is less than 15% (samples X and D), the resistance is remarkably increased. From the above-mentioned results, in order to lower the resistance at low temperatures, it is necessary that the ratio of pore volume B with respect to pore volume A is 15%.

Furthermore, as shown in Table 3 and Fig. 6, in samples C and D, pore volume C is 0.9 ml/g or more. In these cases, as shown in Table 4 and Fig. 6, it is shown from Table 4 and Fig. 6 that the capacitance index is large. As compared with the case where pore volume C is less than 0.9 ml/g (samples X, A, and B), the electrostatic capacitance is remarkably larger. Therefore, in order to increase the electrostatic capacitance, it is preferable to use activated carbon having pore volume C of 0.9 ml/g or more.

Note here that only sample C among the activated carbon listed in Table 3 satisfies these both conditions. That is to say, the total pore volume (pore volume B) in which the slit width obtained by the MP method is 1.0 nm or more and 1.1 nm or less is 15% or more of the total pore volume in which the slit width is 2.0 nm or less. The total pore volume (pore volume C) in which the slit width obtained by the MP method is 1.1 nm or less is 0.9 ml/g or more.

Sample C has a low resistance index and a large capacitance index. The improved resistance index and capacitance index are kept not only in the initial property but also even after a voltage is applied at 60°C at 2.8 V for 600 h. Therefore, sample C has reliability in practical use of a device.

Note here that when the total pore volume in which the slit width obtained by the MP method is 1.0 nm or more and 1.1 nm or less is less than 15% of the total pore volume in which the slit width is 2.0 nm or less, the resistance index after a voltage is applied at 60°C at 2.8 V for 600 h is increased as compared with the initial properties. On the other hand, when the total pore volume in which the slit width obtained by the MP method is 1.0 nm or more and 1.1 nm or less is 15% or more of the total pore volume in which the slit width is 2.0 nm or less, the resistance index after a voltage is applied at 60°C at 2.8 V for 600 h is reduced as compared with the initial properties. This means that in the case where the ratio of the total pore volume A is less than 15%, the increase in the resistance by the deterioration is especially

large and this case is not suitable for practical use. Therefore, it is desirable that the ratio is the value or more.

It is thought that complex reactions caused by heat generation by the resistance are involved in the process of deterioration. However, at present, it is difficult to elucidate the mechanism. Reducing the resistance index is effective to suppress the deterioration because it reduces the heat generation. The present invention is based on the finding that the deterioration rate of the resistance index is different depending on whether or not the ratio of the total pore volume A is 15% or more and that the resistance index can be kept small when the ratio is 15% or more.

Furthermore, the change rates of the capacitance index with respect to the pore volume density of the initial property and the property after a voltage is applied at 60°C at 2.8 V for 600 h are small when the total pore volume in which the slit width obtained by the MP method is 1.1 nm or less is less than 0.9 ml/g. On the other hand, they are large when the total pore volume in which the slit width obtained by the MP method is 1.1 nm or less is 0.9 ml/g or more. Thus, there is a clear difference depending upon whether or not the total pore volume is 0.9 ml/g or more. This is thought to be related to the filling ratio of ions in the pore. That is to say, in order not to prevent the entry of ions into the pore, it is necessary that the slit width is larger than the maximum width of the van der Waals molecule of the ion. However, in activated carbon having a small pore volume density, the ratio of pores having a small slit width tends to be increased. Therefore, it is thought that the entry of ions into the pore is prevented and the filling ratio is small. As a result, an efficiency of creating capacity tends to be lowered. Therefore, the present invention is based on the findings that the density of pore volume B is largely different depending upon whether or not the density of pore volume B is 0.9 ml/g or more. When the density is 0.9 ml/g or more, the filling ratio of ions in the pore is improved, and the capacitance is remarkably increased according to the increase in the pore volume density.

As mentioned above, the ionic conductivity has a maximum value as a function of the slit width. $EDMI^+$ $BF_4^-$/PC has a maximum when the slit width is in the range of 1.0 nm to 1.1 nm and in its vicinity. The lower limit and the upper limit of the slit width agree with the values determined from the structure and the size of the ion and the solvent molecule constituting the electrolytic solution.

From the above-mentioned results, in an actual electric double layer capacitor produced by using activated carbon, it is confirmed that the use of activated carbon having many pores distributed in a range between the upper limit and the lower limit of the slit width makes it possible to reduce the DCR. This result is derived by correctly using the natural laws controlling the behavior of electrolytic ion in the electrolytic solution in an electrode including porous carbon material such as activated carbon, which has been difficult to be understood.

In the above description, an example using $EDMI^+$ $BF_4^-$ /PC+DMC as an electrolytic solution is described. Although not specifically shown, even when other electrolytic solutions are used, it is confirmed that resistance can be reduced when a total pore volume of activated carbon in which a slit width obtained by an MP method is W1 or more and W2 or less is 15% or more of the total pore volume in which the slit width is 2.0 nm or less. Furthermore, it is confirmed that the electrostatic capacitance can be increased when the total pore volume of activated carbon in which the slit width obtained by an MP method is W2 or less is 0.9 ml/g or more.

SECOND EXEMPLARY EMBODIMENT

This exemplary embodiment describes a lithium ion capacitor as an example of an electrochemical element of the present invention. In the lithium ion capacitor, lithium ion is used as a cation, and a negative electrode is allowed to store the cation. Thus, the lithium ion capacitor carries out charge and discharge. A basic configuration of the lithium ion capacitor is the same as that in Figs. 1 to 2B.

An electric double layer capacitor described as an example of the electrochemical element in the first exemplary embodiment and a lithium ion capacitor to be described in this exemplary embodiment are largely different from each other in two points. One point is that electrolytic solution 10 is used instead of electrolytic solution 9. Another point is that negative electrode 12 is used instead of negative electrode 5. As to the other components, the same reference numerals are given to the same components as in the first exemplary embodiment. That is to say, positive electrode 3, separator 6 and the like, in this exemplary embodiment, are the same as in positive electrode 3 in the first exemplary embodiment.

In the electrochemical element in this exemplary embodiment, as electrolytic solution 10, a solution obtained by dissolving lithium salt in an aprotic polar solvent such as ethylene carbonate can be used. For example, 1 M (= 1 mol/ml) electrolytic solution obtained by dissolving salt of lithium ion ($Li^+$) and hexafluorophosphate ($PF_6^-$) in a mixed solvent of ethylene carbonate (EC) and DMC that are mixed with the weight ratio of 1 to 1. However, electrolytic solution 10 of this exemplary embodiment is not necessarily limited to this.

As an anion of an electrolyte that can be used in electrolytic solution 10 of this exemplary embodiment, tetrafluoroborate ($BF_4^-$) and other anions ($ClO_4^-$, $AsF_6^-$, $CF_3SO_3^-$, $(CF_3SO_2)_2N^-$, and the like) can be used instead of $PF_6^-$. Alternatively, a combination with $PF_6^-$ may be used.

Furthermore, as a solvent that can be used in electrolytic solution 10, PC, ethyl methyl carbonate (EMC), and the like, can be used instead of EC and DMC. Cyclic carbonate such as EC and PC shows a high dielectric constant,

and dissolves lithium salt well. On the other hand, chain carbonate such as DMC and EMC has low viscosity. A mixed solvent of these substances that are mixed in an appropriate ratio is preferable because it can reduce resistance of an electrolytic solution. However, electrolytic solution 10 used in this exemplary embodiment is not necessarily limited to the above-mentioned examples and can be formed of various chemical species and compositions.

Negative electrode 12 includes current collector 12A made of copper foil and electrode layer 12B provided on a surface of current collector 12A. The surface of current collector 12A may be roughened by etching similar to the first exemplary embodiment. Electrode layer 12B mainly includes graphitic material such as graphite. The graphitic material has a structure that is similar to that of a graphite crystal, and it may be referred to as easily-graphitizable carbon (soft carbon). Lithium ions can be intercalated between layers of graphite. Negative electrode 12 is charged and discharged by intercalation and deintercalation of lithium ions. Note here that electrode layers 3B and 12B constituting positive electrode 3 and negative electrode 12 may be subjected to press working as in the first exemplary embodiment. With the press working, an electrode density can be improved.

As material of electrode layer 12B, this exemplary embodiment describes a low-resistance soft carbon as an example. However, other material such as graphite carbon, low-temperature calcined carbon, non-graphitizable carbon, or the like, can be used. When physical properties of material are compared with each other, specialized performance is different in each material. Therefore, material may be appropriately selected according to the purpose of use. For example, the graphite carbon has a high withstand voltage and a small loss in a charge and discharge cycle. The low-temperature calcined carbon is excellent in that it has a large capacity density and low resistance. Non-graphitizable carbon is excellent in that it has a large capacity density and small cycle loss.

A production method and measurement methods of a specific surface area and pore distribution of activated carbon that can be used for electrode layer 3B of positive electrode 3 are the same as those in the first exemplary embodiment. Hereinafter, optimization conditions for the pore distribution of activated carbon to reduce a DCR of an electrochemical element in this exemplary embodiment are described.

The optimum conditions for the pore diameter distribution of activated carbon in this exemplary embodiment are thought to be different depending upon the compositions of the electrolytic solution to be combined as in the first exemplary embodiment. Then, a method of determining the pore diameter distribution of activated carbon from the structure and the size of the ion and the solvent contained in the electrolytic solution is described.

In general, the size of a molecule (including an ion) can be represented by a van der Waals diameter as described in the first exemplary embodiment. Furthermore, in the molecule formed by the overlap of van der Waals spheres of atoms, the reference of its size can be the maximum van der Waals width as described in the first exemplary embodiment. From the viewpoint of the size of the molecule as mentioned above, a method for reducing the DCR is considered.

In the first exemplary embodiment, the first condition is considered, namely, the interaction between an ion and a solvent molecule is relatively weak, and solvated ions can be desolvated. On the contrary, in this exemplary embodiment, it is necessary to mainly consider the second condition that the interaction between ions and a solvent molecule is relatively strong and it is difficult to carry out desolvation of solvated ions. Electrolytic solution 10 in the lithium ion capacitor in accordance with this exemplary embodiment applies to this condition.

When a lithium ion is used as a cation, and carbonates such as EC and DMC are used as a solvent, lithium ions and solvent molecules are strongly attracted to each other to be solvated, and thus solvated cluster of lithium ions are formed and stabilized. Therefore, it is necessary to think that the cation is not a single lithium ion, but is regarded as a solvated cluster of lithium ions.

When EC and DMC are used as the solvent, a solvated cluster in which any four solvent molecules of EC or DMC are coordinated to a lithium ion (hereinafter, referred to as "solvated lithium") is formed. When the pore diameter is large enough to involve the solvated lithium in the pore, a lithium ion can be present as a solvated lithium.

The DCR due to the ion conduction in the pore of activated carbon to be used in this exemplary embodiment is thought to be dependent upon the diffusion rate of solvated lithium and an anion in the pore. The solvated lithium and anion in the slit-shaped pore are pressed and deformed by the repulsive power from two walls of the pore as the pore diameter, i.e., the slit width thereof is reduced. As a result, the orientation and the structure of the solvated lithium and anion are changed so that a projected area to the plane parallel to the pore wall is increased. In such a case, when the diffusion of the solvated lithium and anion to the direction parallel to the pore wall are considered, a cross-sectional area for hitting of the solvated lithium and anion is increased, and therefore the diffusion rate is reduced and the DCR is increased.

Furthermore, in a small pore, when the solvated lithium is distorted in the structure, it becomes unstable in terms of energy, and is not easily present as a solvate. That decreases ionization degree. Therefore, the ionic conductivity is easily reduced and the DCR is increased.

From such a viewpoint, in order to prevent the ionic conductivity from being reduced, the pore diameter of activated carbon in this exemplary embodiment needs to be not less than a predetermined size that does not cause forcible changes of the orientation and the structure of the solvated lithium and the anion. This predetermined value is

thought to be the van der Waals diameter or the maximum van der Waals width of the solvated lithium or the anion. Change of structure of solvated lithium with respect to the slit width is described later in detail.

This exemplary embodiment assumes the case in which a cation is a lithium ion. However, the embodiment is not necessarily limited to this case. When a proton, a cation of alkali metal (Li, Na, K, or the like), a mono-atom cation of univalent or divalent cation such as alkali earth metal (Be, Ca, Mg, or the like) and other polyvalent cations, which tend to form a solvated cluster (hereinafter, referred to as "solvate cations"), are used, the same consideration can be applied. That is to say, other than lithium ion, cation that tends to be strongly bound to a solvent molecule and solvated can be treated similarly to the lithium ion.

Furthermore, when an anion is strongly bound to a solvent molecule and solvated, it is necessary to consider a solvated cluster of anion. For example, halogen (F, Cl, Br, I, or the like) may form a solvated cluster of anion (hereinafter, referred to as "solvated anion") depending upon a solvent to be combined, thus making it difficult to be desolvated. In this case, an anion is not a single anion, but needs to be regarded as a solvated anion.

In the first exemplary embodiment, a basic idea for improving the ionic conductivity with respect to each of the first and second conditions is described. This idea, in particular, the idea considering the second condition can be applied to activated carbon to be used in the lithium ion capacitor in this exemplary embodiment.

Also in this exemplary embodiment, the most basic and import thing is that it is effective that the ionic conductivity has a maximum value with respect to the slit width, and that the slit width is distributed in a certain range around this maximum value as a center in order to improve the ionic conductivity. This certain range can be determined to be W1 or more and W2 or less when W1 and W2 satisfy Wmin ≤ W1 < W2 ≤ Wmax. Wmin and Wmax can be 1.0 nm and 2.0 nm, respectively, as described in the first exemplary embodiment.

As to ion diffusion in the pore, verification results by MD simulation are shown later as in the first exemplary embodiment. Based on the above-mentioned consideration, a method for reducing the DCR of the lithium ion capacitor in this exemplary embodiment can be given to the second condition as follows.

The Van der Waals molecular diameters of a solvated cluster of cation, an anion, and a solvent contained in the electrolytic solution are denoted by Lc, La, and Ls, respectively. The maximum widths of the van der Waals molecules of the cation, anion, and solvent are denoted by Lmax(c), Lmax(a), and Lmax(s), respectively. The maximum value of Lc, La, Ls, Lmax(c), Lmax(a), and Lmax(s) is denoted by W1. W2 is 2.0 nm. At this time, in order to reduce the DCR, the total pore volume of activated carbon, in which a slit width obtained by an MP method is W1 or more and W2 or less, needs to be a predetermined value or more.

In order to reduce the DCR of the lithium ion capacitor in this exemplary embodiment, W 1 and W2 determined as mentioned above satisfy 1.0 nm ≤ W1 < W2 ≤ 2.0 nm, and the total pore volume of activated carbon in which a slit width obtained by the MP method is W1 or more and W2 or less needs to be a predetermined value or more.

Similar to the first exemplary embodiment, activated carbon used in this exemplary embodiment includes pores called micro-pores having a diameter of mainly 2.0 nm or less and highly growing three-dimensionally. Therefore, the activated carbon has a large surface area. As shown in the first exemplary embodiment, in the distribution of the slit widths of the pores of activated carbon, pores having a slit width of more than 2.0 nm hardly contribute to the DCR. Therefore, in order to reduce the DCR, it is preferable that the number of pores, which have a slit width of 2.0 nm or less and which do not prevent the diffusion of an ion, is large. Specifically, as mentioned above, the total pore volume in which the slit width is W1 or more and W2 or less needs to be 15% or more as mentioned above. This ratio does not have an upper limit, and may be 100% as mentioned below. The following is a detailed description of the optimization conditions for the pore distribution of activated carbon, which is determined by applying the above-mentioned method to electrolytic solution 10, the verification results by MD simulation, and the measurement results of the DCR in the lithium ion capacitor in this exemplary embodiment.

Firstly, the optimization conditions for the pore distribution of the activated carbon in this exemplary embodiment are described. In the lithium ion capacitor in this exemplary embodiment, $Li^+$ is used as a cation. $PF_6^-$ is used as an anion. A mixed solvent of EC and DMC that are mixed in the molar ratio of 1 : 1 is used as a solvent.

Table 5 shows various parameters of $Li^+$ solvated clusters ($Li^+(EC)_4$, $Li^+(EC)_3(DMC)_1$, $Li^+(EC)_2(DMC)_2$, $Li^+(EC)_1(DMC)_3$, $Li^+(DMC)_4$), $PF_6^-$, EC, and DMC. Specifically, Table 5 shows the van der Waals volume (Vvdw), the van der Waals radius (Rvdw), and the maximum width of van der Waals molecule (Dmax). In this regard, Vvdw is calculated based on a stable structure obtained by the first principle molecular orbital calculation (HF/6-31G(d)) of ions and molecules as in the first exemplary embodiment. Note here that conditions for the first principle molecular orbital calculation and Rvdw of each atom are the same as in the first exemplary embodiment.

Table 5

| | Vvdw ($nm^3 \times 10^{-3}$) | Rvdw ($nm \times 10^{-1}$) | Dmax ($nm \times 10^{-1}$) |
|---|---|---|---|
| $Li^+(EC)_4$ | 485.62 | 4.88 | 13.19 |

(continued)

| | Vvdw ($nm^3 \times 10^{-3}$) | Rvdw ($nm \times 10^{-1}$) | Dmax ($nm \times 10^{-1}$) |
|---|---|---|---|
| $Li^+(EC)_3(DMC)_1$ | 507.05 | 4.95 | 13.05 |
| $Li^+(EC)_2(DMC)_2$ | 525.02 | 5.00 | 12.87 |
| $Li^+(EC)_1(DMC)_3$ | 551.77 | 5.09 | 12.96 |
| $Li^+(DMC)_4$ | 570.19 | 5.14 | 12.03 |
| $PF_6^-$ | 55.77 | 2.37 | 6.15 |
| EC | 84.17 | 2.72 | 6.87 |
| DMC | 124.97 | 3.10 | 8.53 |

The van der Waals molecular diameters (Rvdw $\times$ 2) of solvated lithium, an anion, and a solvent in Table 5 are denoted by Lc, La, and Ls, respectively. The maximum widths of the van der Waals molecule (Dmax) of solvated lithium, an anion, and a solvent are denoted by Lmax(c), Lmax(a), and Lmax(s), respectively. The maximum value of Lc, La, Ls, Lmax(c), Lmax(a), and Lmax(s) is denoted by W1. Herein, since four types of solvated lithium are present, Lc and Lmax(c) with respect to the respective types, Lc($Li^+(EC)_4$), Lc($Li^+(EC)_3(DMC)_1$), Lc($Li^+(EC)_2(DMC)_2$), Lc($Li^+(EC)_1(DMC)_3$), Lc($Li^+(DMC)_4$), Lmax(c)($Li+(EC)_4$), Lmax(c)($Li^+(EC)_3(DMC)_1$), Lmax(c)($Li^+(EC)_2(DMC)_2$), Lmax(c)($Li^+(EC)_1(DMC)_3$), and Lmax(c)($Li^+(DMC)_4$), are assumed. Furthermore, since two types of solvents, namely, EC and DMC, are present, Ls and Lmax(s) with respect to the respective types, Ls(EC), Ls(DMC), Lmax(s)(EC), and Lmax(s)(DMC) are assumed. For all the values, W1 is determined by the method mentioned above.

As a result, W1 is determined as Lmax(c) of $Li^+(EC)_4$, W1 = Lmax(c) ($Li^+(EC)_4$) = 13.19Å $\cong$ 1.3 nm is satisfied. However, in the four types of solvated lithium, Lmax(c) is not so different except for $Li^+(EC)_4$. The value of W1 $\cong$ 1.3 nm can be obtained with reference to any one of values.

Therefore, in this exemplary embodiment, the total pore volume in which the slit width obtained by the MP method is 1.3 nm or more needs to be 15% or more of the total pore volume in which the slit width is 2.0 nm or less. By using activated carbon having pore distribution that satisfies this condition, the DCR can be reduced.

(Verification 2 by Simulation)

Next, an analysis method of ionic conductivity in slit pores of activated carbon used for a lithium ion capacitor in this exemplary embodiment by using MD simulation and results thereof are described.

In the simulation, the following conditions are applied. Total 256 particles including 20 particles of $Li^+$, 20 particles of $PF_6^-$, 108 particles of EC, and 108 particles of DMC are provided in a unit cell in such a manner that the particles are contained between two parallel slit walls. Under the periodic boundary condition, ion diffusion to the direction parallel to the slit walls is analyzed. The specific method thereof is the same as in the first exemplary embodiment.

Table 6 shows analysis results of the conductivity based on the above-mentioned MD simulation. Fig. 7 is a graph showing a relation between TD-CMSD and 1/L1, that is, the inverse number of L1, of each electrolytic solution material shown in Table 6. Herein, A (Total) signifies a time-derivative value of the right hand of Math. 1. Furthermore, A ($Li^+$) and A ($PF_6^-$) signify time-derivative values of the sum of the term satisfying i = j belonging to each of $Li^+$ and $PF_6^-$ among the sum of the right hand of Math. 1, and they are the same as those of the time-derivative values of $Li^+$ and $PF_6^-$ in the right hand of Math. 2, respectively. A is referred to as TD-CMSD as in the first exemplary embodiment. Also in this exemplary embodiment, since TD-CMSD is in proportion to conductivity $\lambda$, it is an index for evaluating the size of the conductivity.

Table 6

| slit width L1 (nm) | slit width L2 (nm) | 1/L1 ($nm^{-1}$) | $\Lambda$(Total) ($nm^2$/psec $\times 10^{-2}$) | $\Lambda$($Li^+$) ($nm^2$/psec $\times 10^{-2}$) | $\Lambda$($PF_6^-$) ($nm^2$/psec $\times 10^{-2}$) |
|---|---|---|---|---|---|
| 3.00 | 2.62 | 0.33 | 1.069 | 0.725 | 0.967 |
| 2.00 | 1.62 | 0.50 | 1.866 | 1.461 | 1.744 |
| 1.70 | 1.32 | 0.59 | 1.631 | 1.413 | 1.540 |
| 1.50 | 1.12 | 0.89 | 1.064 | 1.391 | 1.454 |
| 1.00 | 0.62 | 1.62 | 0.356 | 1.224 | 1.369 |

In table 6, the definitions of slit widths L1 and L2 are the same as those in the first exemplary embodiment, and L2 corresponds to a slit width calculated by the pore distribution measurement by the MP method. Fig. 7 shows plotting

of the change of TD-CMSD with respect to 1/L1 and shows values of L2 corresponding to each plot.

A ($Li^+$) and A ($PF_6^-$) correspond to diffusion coefficients of ions. In a dilute electrolytic solution, the sum of A ($Li^+$) and A ($PF_6^-$) affects the ionic conductivity of an electrolytic solution. However, when the concentration of the electrolytic solution is a predetermined value or greater, the interaction between ions becomes strong. Therefore, A (Total) needs to be considered. According to the results of Table 6 and Fig. 7, A (Total) is smaller than the sum of A ($Li^+$) and A ($PF_6^-$). This means that, for example, a cation-anion associate is formed due to the interaction between ions, thereby reducing the ionic conductivity of an electrolytic solution.

Furthermore, the results of Table 6 and Fig. 7 show that A (Total) has a maximum value when slit width is around L1 = 2.0 nm (L2 = 1.62 nm) and the ionic conductivity has a maximal value.

Furthermore, in a region in which slit width L1 is less than 2.0 nm, that is, L2 is less than 1.62 nm, the reduction of A (Total) due to the reduction of the slit width is more remarkable than the reduction of A ($Li^+$) and A ($PF_6^-$). This shows that the conductivity is reduced at not lower level than the level of the reduction of the diffusion coefficient of $Li^+$ and $PF_6^-$. This means that in the movement of ions, a case in which displacement of two same types of ions (zi = zj) are directed in the opposite direction ([Ri(t)-Ri(0)][Rj(t)-Rj(0)] < 0), or a case in which the change of two different types of ions (zi = -zj) are directed in the same direction ([Ri(t)-Ri(0)][Rj(t)-Rj(0)] > 0) is increased, thereby the negative contribution from the sum relating to $i \neq j$ becomes larger in the sum of i and j of the right hand of Math. 1. At this time, in the movement of the different types of ions, a case in which cation and anion form an associate and they move as one unit is increased. In other words, this means that the degree of ionization of an electrolytic solution is reduced.

Table 6 and Fig. 7 show that the ionic conductivity in the slit pore has a maximal value when slit width L2 obtained by the MP method is in the range of 1.3 nm to 2.0 nm and in its vicinity.

Thus, the ionic conductivity has a maximal value as a function of the slit width. $Li^+PF_6^-$/(EC+DMC) has a maximal value when the slit width is in the range of 1.3 nm to 2.0 nm and in its vicinity. The lower limit and the upper limit of the slit width agree with the values (W1 and W2) determined from the structure and the size of the ions and the solvent molecule constituting the electrolytic solution.

In order to clarify these things, a solvation structure of $Li^+$ is considered, hereinafter. Fig. 8 is an image view showing a solvation structure of a lithium ion in accordance with this exemplary embodiment. Fig. 9A is a graph showing a relation between types of ligand of $Li^+$ and an average value of the total number of fluorine of $PF_6^-$, oxygen of an oxo group of EC, and oxygen of an oxo group of DMC that are present in a predetermined distance from $Li^+$ as a center when slit width L1 of the activated carbon is 3.0 nm (L2 = 2.62 nm). Fig. 9B shows the relation when slit width L1 is 2.0 nm (L2 = 1.62 nm), Fig. 9C shows the relation when slit width L1 is 1.5 nm (L2 = 1.12 nm), and Fig. 9D shows the relation when slit width L1 is 1.0 nm (L2 = 0.62 nm), respectively, as in Fig. 9A.

Fig. 8 shows spheres in which $Li^+$ is located in a center thereof. As shown in Figs. 9A and 9B, in each slit pore having slit width L1 of 3.0 nm and 2.0 nm, between a sphere having a radius of 2.0 Å and a sphere having a radius of 2.8 Å, approximately two each of EC and DMC are present, and $PF_6^-$ is hardly present.

Furthermore, as shown in Fig. 9C, in the slit pore in which slit width L1 is 1.5 nm, the distributions of EC and DMC are not so different from those in the slit pore in which slit width is larger than 1.5 nm. However, the distribution of $PF_6^-$ is different. $PF_6^-$ approaches $Li^+$, and is present from a region of about 2.0 Å. This means that the structure of solvated lithium is distorted, and $PF_6^-$ enters into between solvent molecules. Furthermore, as shown in Fig. 9D, in the slit pore in which slit width L1 is 1.0 nm, one DMC coordinated at $Li^+$ in the slit pore that is larger than the above-mentioned slit pore is detached, and two ECs, one DMC, and one $PF_6^-$ are present in the vicinity of $Li^+$. That is to say, it is shown from Figs. 9C and 9D that when slit width L1 becomes narrow, $Li^+$ forms an associate together with $PF_6^-$, the degree of ionization is lowered, and the conductivity is reduced.

From the above description, when the slit width is large, a lithium ion is present as a solvated lithium. However, when the slit width is a predetermined threshold value or less, the solvated lithium cannot be easily incorporated into the slit in a state in which it maintains a stable structure, and is distorted in the structure. As a result, the structure of the solvated lithium becomes unstable in terms of energy, desolvation or substitution between a solvent molecule and $PF_6^-$ occurs. This threshold value is present between L1 = 2.0 nm (L2 = 1.62 nm) and L1 = 1.5 nm (L2 = 1.12 nm).

Furthermore, it is thought that the threshold value is determined depending upon the size of solvated lithium, and is represented by a larger value of the van der Waals diameter (Lc) and the maximum van der Waals width (Lmax (c)) of solvated lithium. According to Table 5, since Lmax(c) of $Li^+(EC)_4$ is maximum, the above-mentioned threshold value is Lmax(c) ($Li^+(EC)_4$) = 13.19Å $\cong$ 1.3 nm. However, in the four types of solvated lithium, Lmax(c) is not so different except for $Li^+(EC)_4$. A value of 1.3 nm can be obtained with reference to any of the values. This threshold value is between L2 = 1.62 nm and L2 = 1.12 nm, and agrees with a point at which a structural change of the solvated lithium occurs.

As mentioned above, a cation or an anion, which tends to be strongly bound to a solvent molecule and to be solvated, such as $Li^+$, is treated as a solvated cation or a solvated anion, and a value (=W1) determined from the structure and the size of ion and solvent molecule constituting an electrolytic solution may be obtained.

(Performance Evaluation Test 2)

Next, a measurement method of DCR of a lithium ion capacitor and results thereof in this exemplary embodiment are described. As a lithium ion capacitor, as to a case in which a $Li^+PF_6^-$-based electrolytic solution is used, activated carbon in this exemplary embodiment and a lithium ion capacitor using the same are described with reference to specific example.

Table 7 shows parameters of sample Y and samples E to I of all activated carbon used in this exemplary embodiment. In Table 7, a pore volume in which a slit width is 2.0 nm or less, that is, a total pore volume is defined by pore volume A (ml/g). A slit width in which the pore volume is maximal is defined as a peak pore diameter (nm). A pore volume in which the slit width is 1.3 to 2.0 nm is defined as pore volume D (ml/g). In addition to these, Table 7 also shows an average particle diameter D50 (μm) and a total surface area ($m^2/g$).

Table 7

| | Y | E | F | G | H | I |
|---|---|---|---|---|---|---|
| average particle diameter D50(μm) | 3.0 | 5.0 | 5.6 | 5.5 | 5.4 | 3.3 |
| total surface area ($m^2/g$) | 2481 | 2128 | 2302 | 2376 | 2406 | 2049 |
| total pore volume A (ml/g) | 0.98 | 1.10 | 1.57 | 1.70 | 1.40 | 1.16 |
| peak pore diameter (nm) | 0.8 | 0.9 | 0.9 | 0.9 | 1.0 | 0.9 |
| pore volume D (ml/g) | 0.122 | 0.178 | 0.291 | 0.335 | 0.299 | 0.281 |
| D/A (%) | 12.4 | 16.2 | 18.5 | 19.7 | 21.3 | 24.2 |

Next, production methods of positive electrode 3 and negative electrode 12 are described. As to positive electrode 3, firstly, commercially available carboxymethylcellulose (CMC) as a water soluble binder and acetylene black are mixed to each of the activated carbons shown in Table 7. At this time, the mass ratio of activated carbon : CMC : acetylene black is set at 8 : 1 : 1. This mixture is formed into paste by adding water or an organic solvent to the mixture. The prepared paste is applied to aluminum foil as current collector 3A, which is dried so as to produce a sheet-like electrode body. Furthermore, this electrode body is subjected to press working so as to form electrode layer 3B. The pressed electrode body is cut into a predetermined dimension. The end portion of electrode layer 3B is peeled off, and lead wire 2 is connected to current collector 3A. Thus, positive electrode 3 is completed.

As to negative electrode 12, firstly, a commercially available carboxymethylcellulose (CMC) as water-soluble binder is mixed to graphitic material. At this time, the mass ratio of carbon material : CMC is set at 9 : 1. This mixture is formed into paste. The prepared paste is applied to copper foil as current collector 12A, which is dried so as to produce a sheet-like electrode body. Furthermore, this electrode body is subjected to press working so as to form electrode layer 12B. The pressed electrode body is cut into a predetermined dimension, and a metallic lithium layer is formed on electrode layer 12B. After that, by allowing metallic lithium to penetrate into electrode layer 12B, the electric potential of the electrode is stabilized at 0.15 V to 0.25 V with respect to $Li/Li^+$. The end portion of electrode layer 12B of the electrode body is peeled off, and lead wire 4 is connected to current collector 12A. Thus, negative electrode 12 is completed.

By using the thus produced positive electrode 3 and negative electrode 12, a lithium ion capacitor having a diameter of 18 mm and a height of 50 mm is assembled. At this time, electrolytic solution 10 obtained by dissolving salt of $Li^+$ and $PF_6^-$ in a mixed solvent of EC and DMC that are mixed in the molar ratio of 1 : 1 at the concentration of 1M is used. In order to measure the DCR of positive electrode 3 and the DCR of negative electrode 12 separately, metallic lithium as a reference electrode is disposed in the lithium ion capacitor (in electrolytic solution 10) such that it is not brought into contact with positive electrode 3 and negative electrode 12.

In order to measure the DCR of a lithium ion capacitor in this exemplary embodiment, the following electric evaluation is carried out. Firstly, a lithium ion capacitor is charged with a constant current of 1.5 A. When the electric potential of positive electrode 3 reaches 4.0 V, an electric current is attenuated while the electric potential is maintained constantly, and charging is further carried out. After that, discharging is carried out at a constant current of 1.0 A, and the DCR is calculated from a voltage drop which occurs when discharging is started. That is to say, the voltage gradient is derived from each measurement voltage during 0.5 to 2.0 seconds after the start of discharge, a voltage at the time when the discharge is started is determined from this voltage gradient, and the voltage difference between this voltage and the charging voltage (4.0 V) is measured. The direct current resistivity (Ω·m) of a capacitor is calculated from the voltage difference, discharge current, a thickness of the electrode layer, and an area of the electrode layer.

Table 8 shows the direct current resistivity (Ω·m) at 25°C, calculated by the above-mentioned method, and a resistance index that is a value normalized by the direct current resistivity of sample Y. Fig. 10 shows a relation between

the above-mentioned direct current resistivity and a ratio D/A (%) of pore volume D in which a slit width is 1.3 to 2.0 nm with respect to pore volume A in the above-mentioned samples E to I and Y.

Table 8

| | Y | E | F | G | H | I |
|---|---|---|---|---|---|---|
| direct current resistivity (Ω·m) | 12.28 | 7.16 | 5.67 | 5.97 | 6.95 | 6.12 |
| resistance index | 1.00 | 0.58 | 0.46 | 0.49 | 0.57 | 0.50 |

While the ratio of pore volume D with respect to pore volume A is 15% or more in samples E to I, it is 15% or less in sample Y. According to Table 8 and Fig. 10, in all of samples E, F, G, H and I, the direct current resistivity is 8.00 Ω·m or less, which is smaller than the direct current resistivity of 12.28 Ω·m in sample Y. These values are measurement values at 25°C, but it is confirmed that, also at such a low temperature as -30°C, the DCR is reduced in samples in which the ratio of pore volume D with respect to pore volume A is 15% or more.
Thus, the total pore volume in which the slit width obtained by the MP method is 1.3 nm or more and 2.0 nm or less is 15% or more of the total pore volume in which the slit width is 2.0 nm or less, the direct current resistivity of the electrode can be reduced, which contributes to the reduction of the internal resistance of a lithium ion capacitor.
Fig. 11 shows results of comparison between the distribution of slit widths obtained by the MP method and TD-CMSD obtained as a result of the analysis of the ionic conductivity in the above-mentioned samples in this exemplary embodiment. Fig. 11 shows that the slit width distributions of any activated carbon samples are unevenly present in a region of the slit width that is smaller than the slit width showing a maximal value of TD-CMSD, that is, a maximal value of the conductivity. Furthermore, it can be understood that since samples E to I have a larger slit width as compared with that of sample Y, the conductivity tends to be increased. As described above, it is thought that activated carbon having high distribution of slit width in the range from 1.3 nm to 2.0 nm is desirable in order to improve the conductivity.
The optimum range of this slit width agrees with the values determined from the structure and the size of the ion and the solvent molecule constituting the electrolytic solution. Although the upper limit is determined to be a fixed value of W2 = 2.0 nm, it is shown from Fig. 11 that when the slit width is larger than 2.0 nm, the ionic conductivity in the slit is reduced, which is disadvantageous for improving the conductivity. That is to say, W2 is not just an upper limit of the slit width distribution of micro pores of activated carbon, but has an important meaning as an upper limit necessary for improvement of the ionic conductivity.
From the above-mentioned results, in a lithium ion capacitor in this exemplary embodiment, when activated carbon in which a larger number pores are distributed in the range between the upper limit and the lower limit of the slit width is used, the DCR can be reduced. This result is derived by correctly using the natural law controlling the behavior of ions in an electrolytic solution in an electrode including porous carbon material such as activated carbon, which has been difficult to understand.
Note here that in the above description, a case in which $Li^+PF5-/(EC+DMC)$ is used as an electrolytic solution is described as an example. Although not specifically shown, it is confirmed that resistance can be reduced when the total pore volume of activated carbon in which a slit width obtained by the MP method is W1 or more W2 or less is 15% or more of the total pore volume in which the slit width is 2.0 nm or less even if the other electrolytic solution is used.
Note here that the first and second exemplary embodiments relate to activated carbon and an electrochemical element including the activated carbon in its electrode. However, the invention is essentially based on the basic principle of the behavior of ions in the pore, and it can be applied not limited to the configuration but to any aspects in which improvement of the ionic conductivity is required. In other words, activated carbon is just an example of porous material having a large number of pores inside. Material other than activated carbon can be used as long as it has pores capable of containing an electrolytic solution. Regardless of compositions and production methods, any porous material can be used for improving ionic conductivities of electrolytic solutions in the pore when it is designed so that the pore distribution satisfies the conditions of the present invention. Furthermore, the composition of the electrolytic solution is not necessarily limited to the example mentioned herein.
In other words, the present invention can be applied to an element using physical adsorption and chemical absorption in the solid-liquid interface between the electrode and the electrolytic solution and phenomena relating thereto, that is, an electrochemical element. Examples of such electrochemical elements include a secondary battery, a capacitor, a sensor, a molecular sieve, a catalyst, a light-emitting element, photo-cell, and the like. The present invention can be applied when porous material and an electrolytic solution are used according to any necessary.

INDUSTRIAL APPLICABILITY

An electrochemical element using activated carbon used for an electrochemical element of the present invention

shows low direct current resistivity, and has a large power density. Such an electrochemical element can be used as power source devices for various electronic apparatuses, automobiles such as electric vehicles, hybrid vehicles and fuel cell automobiles, and other industrial apparatuses. This can largely contribute to a stable operation of an apparatus, energy saving, and the like.

REFERENCE MARKS IN THE DRAWINGS

| | |
|---|---|
| 1 | capacitor element |
| 2, 4 | lead wire |
| 3 | positive electrode |
| 3A, 5A, 12A | current collector |
| 3B, 5B, 12B | electrode layer |
| 5, 12 | negative electrode |
| 6 | separator |
| 7 | sealing member |
| 8 | case |
| 9, 10 | electrolytic solution |
| 103A, 105A | surface |

## Claims

1. Activated carbon to be used for an electrochemical element comprising an electrolytic solution,
wherein a total pore volume of the activated carbon, in which a slit width obtained by an MP method ranges from W1 to W2, inclusive, amounts to 15% or more of a total pore volume of the activated carbon in which the slit width obtained by the MP method is 2.0 nm or less, where a relation of $1.0 \text{ nm} \leq W1 < W2 \leq 2.0 \text{ nm}$ is established.

2. The activated carbon used for an electrochemical element according to claim 1,
wherein assuming that diameters of van der Waals molecules of a cation, an anion, and a solvent contained in the electrolytic solution are denoted by Lc, La, and Ls, respectively; and maximum widths of the van der Waals molecules of the cation, the anion, and the solvent are denoted by Lmax(c), Lmax(a), and Lmax(s), respectively, then
a maximum value of Lc, La, Ls, Lmax(c), Lmax(a), and Lmax(s) is W1; and
a minimum value of (Lc + La), (Lc + Ls), (La +Ls), (Lmax(c) + Lmax(a)), (Lmax(c) + Lmax(s)), and (Lmax(a) + Lmax(s)) is W2.

3. The activated carbon used for an electrochemical element according to claim 2, wherein W1 is 1.0 nm and W2 is 1.1 nm.

4. The activated carbon used for an electrochemical element according to claim 2, wherein a total pore volume of the activated carbon, in which the slit width obtained by the MP method is W2 or less, amounts to 0.9 ml/g or more.

5. The activated carbon used for an electrochemical element according to claim 4, wherein W2 is 1.1 nm.

6. The activated carbon used for an electrochemical element according to claim 2, wherein the electrochemical element comprises the electrolytic solution including at least one of cations represented by chemical formula (1) as the cation, and at least one of tetrafluoroborate and hexafluorophosphate as the anion,

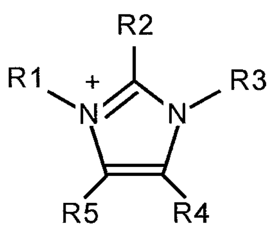

(1)

wherein, in chemical formula (1), each occurrence of R1, R2, R3, R4, and R5 represents independently a hydrogen atom or an alkyl group containing 1 to 10 carbon atoms, any of R1 to R5 may be the same, and carbon atoms contained in R1 to R5 may bond together to form a cyclic structure.

7. The activated carbon used for an electrochemical element according to claim 2, wherein the electrochemical element comprises the electrolytic solution including 1-ethyl-2,3-dimethyl imidazolium as the cation, tetrafluoroborate as the anion, and propylene carbonate as the solvent.

8. The activated carbon used for an electrochemical element according to claim 1, wherein assuming that the cation forms a solvated cluster of cations, and maximum widths of van der Waals molecules of the solvated cluster, the anion, and the solvent are denoted by Lmax(c), Lmax(a) and Lmax(s), respectively, then,
a maximum value of Lc, La, Ls, Lmax(c), Lmax(a), and Lmax(s) is W1, and
W2 is 2.0 nm.

9. The activated carbon used for an electrochemical element according to claim 8, wherein W1 is 1.3 nm.

10. The activated carbon used for an electrochemical element according to claim 8, wherein the electrochemical element comprises the electrolytic solution including at least one of tetrafluoroborate and hexafluorophosphate as the anion.

11. The activated carbon used for an electrochemical element according to claim 8, wherein the electrochemical element comprises the electrolytic solution including lithium as the cation, at least one of tetrafluoroborate and hexafluorophosphate as the anion, and at least one of ethylene carbonate, propylene carbonate, dimethyl carbonate, and ethyl methyl carbonate as the solvent.

12. An electrochemical element comprising:

a positive electrode;
a negative electrode;
an electrolytic solution including a cation, an anion and a solvent; and
a case accommodating the positive electrode, the negative electrode, and the electrolytic solution,
wherein the positive electrode includes activated carbon used for an electrochemical element according to claim 1.

13. The electrochemical element according to claim 12,
wherein assuming that diameters of van der Waals molecules of the cation, the anion, and the solvent contained in the electrolytic solution are denoted by Lc, La, and Ls, respectively; and
maximum widths of the van der Waals molecules of the cation, the anion, and the solvent are denoted by Lmax(c), Lmax(a), and Lmax(s), respectively, then,
a maximum value of Lc, La, Ls, Lmax(c), Lmax(a), and Lmax(s) is W1; and
a minimum value of (Lc + La), (Lc + Ls), (La +Ls), (Lmax(c) + Lmax(a)), (Lmax(c) + Lmax(s)), and (Lmax(a) + Lmax(s)) is W2.

14. The electrochemical element according to claim 13, wherein W1 is 1.0 nm, and W2 is 1.1 nm.

15. The electrochemical element according to claim 13, wherein a total pore volume of the activated carbon, in which the slit width obtained by the MP method is W2 or less, amounts to 0.9 ml/g or more.

16. The electrochemical element according to claim 15, wherein W2 is 1.1 nm.

17. The electrochemical element according to claim 13, wherein the electrolytic solution includes at least one cation represented by chemical formula (1) as the cation, and at least one of tetrafluoroborate and hexafluorophosphate as the anion:

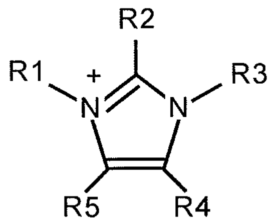

(1)

wherein, in chemical formula (1), each occurrence of R1, R2, R3, R4, and R5 represents independently a hydrogen atom or an alkyl group containing 1 to 10 carbon atoms, any of R1 to R5 may be the same, and carbon atoms contained in R1 to R5 may bond together to form a cyclic structure.

**18.** The electrochemical element according to claim 13, wherein the electrolytic solution includes 1-ethyl-2,3-dimethyl imidazolium as the cation, tetrafluoroborate as the anion, and propylene carbonate as the solvent.

**19.** The electrochemical element according to claim 12, wherein assuming that the cation forms a solvated cluster of cations, and maximum widths of the van der Waals molecules of the solvated cluster, the anion, and the solvent are denoted by Lmax(c), Lmax(a) and Lmax(s), respectively, then,
a maximum value of Lc, La, Ls, Lmax(c), Lmax(a), and Lmax(s) is W1, and
W2 is 2.0 nm.

**20.** The electrochemical element according to claim 19, wherein W1 is 1.3 nm.

**21.** The electrochemical element according to claim 19, wherein the electrolytic solution includes at least one of tetrafluoroborate and hexafluorophosphate as the anion.

**22.** The electrochemical element according to claim 19, wherein the electrolytic solution includes lithium as the cation, at least one of tetrafluoroborate and hexafluorophosphate as the anion, and at least one of ethylene carbonate, propylene carbonate, dimethyl carbonate, and ethyl methyl carbonate as the solvent.

**23.** The electrochemical element according to claim 12, wherein the negative electrode includes activated carbon used for an electrochemical element according to claim 1.

FIG. 1

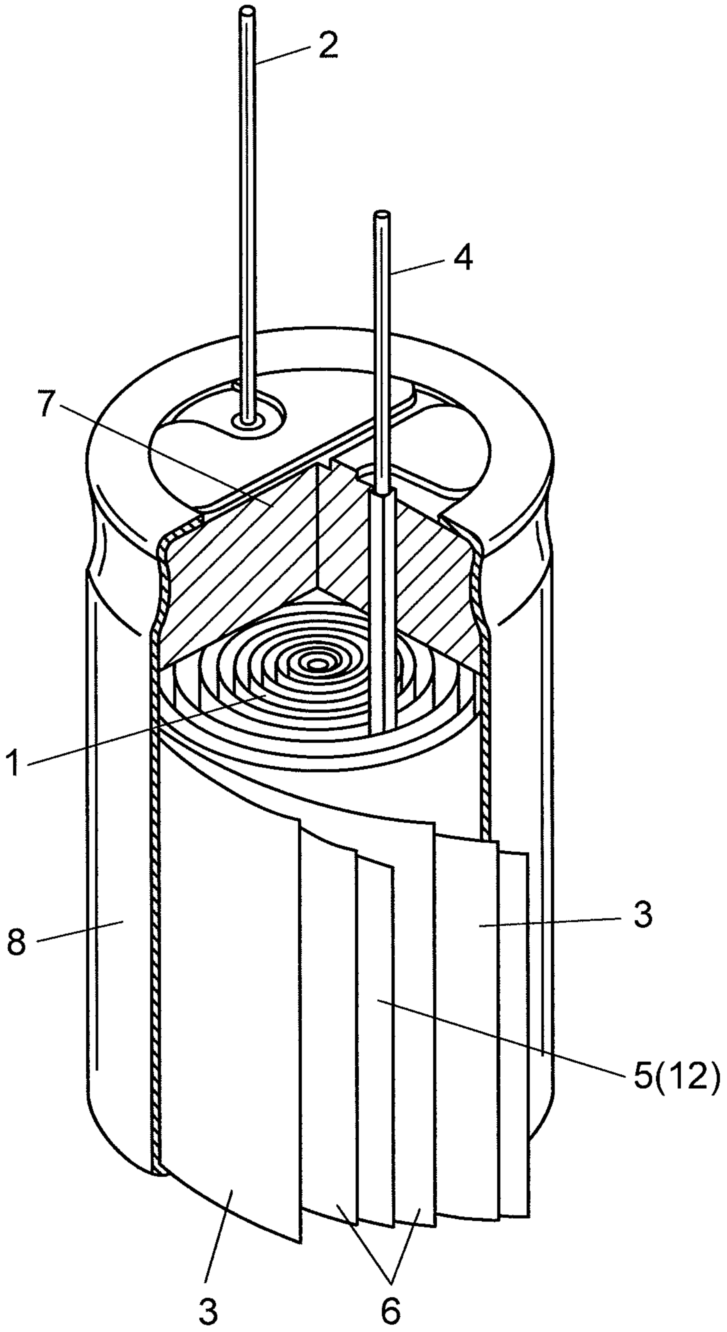

FIG. 2A

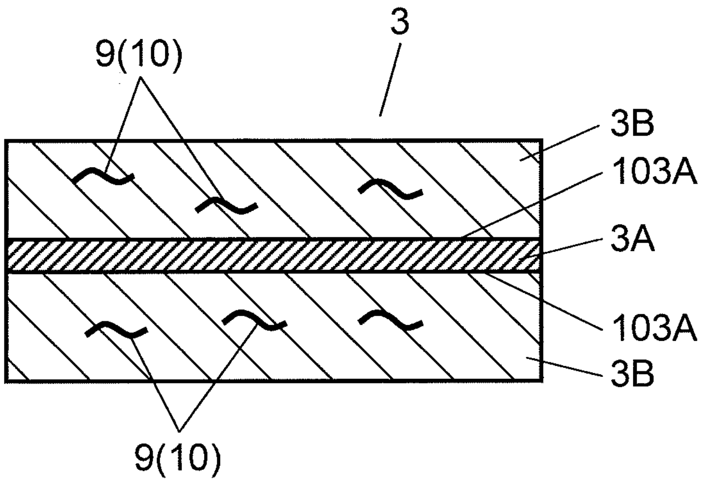
3
9(10)
3B
103A
3A
103A
3B
9(10)

FIG. 2B

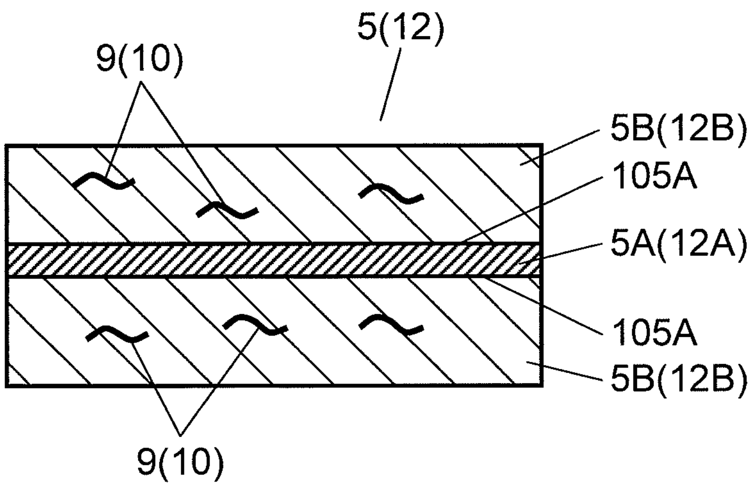
5(12)
9(10)
5B(12B)
105A
5A(12A)
105A
5B(12B)
9(10)

FIG. 3

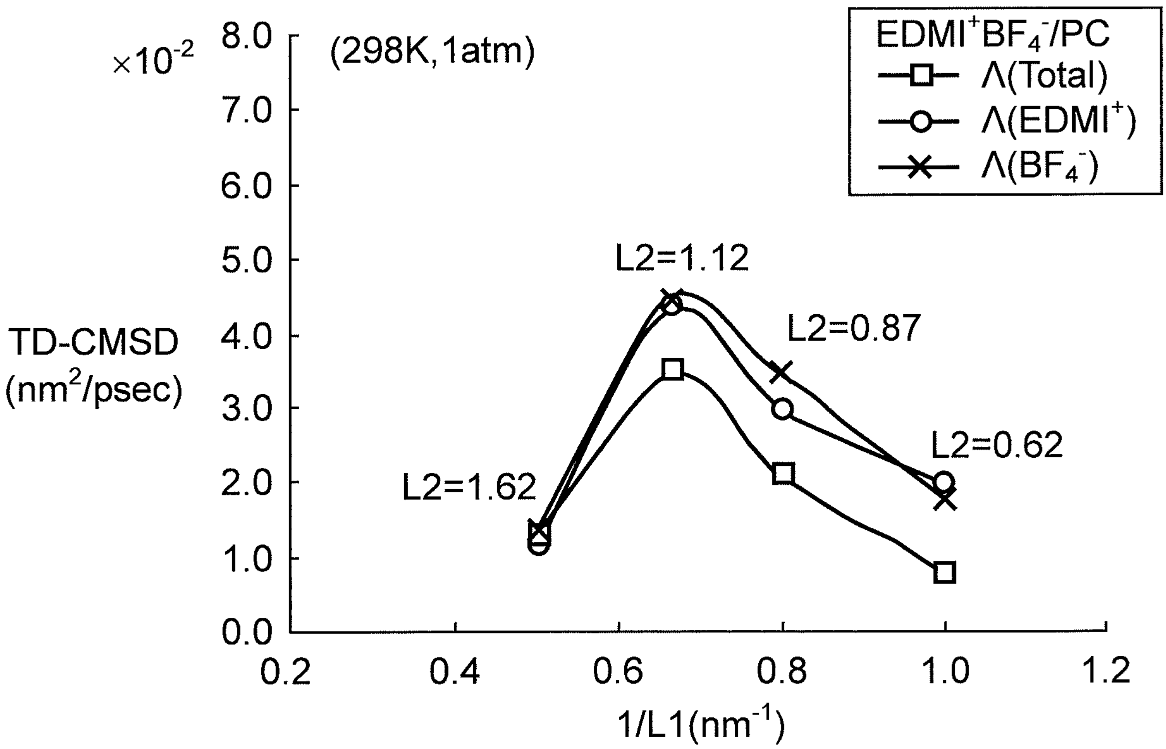
×10⁻²
(298K,1atm)
EDMI⁺BF₄⁻/PC
Λ(Total)
Λ(EDMI⁺)
Λ(BF₄⁻)
TD-CMSD (nm²/psec)
8.0
7.0
6.0
5.0
4.0
3.0
2.0
1.0
0.0
L2=1.12
L2=0.87
L2=0.62
L2=1.62
0.2
0.4
0.6
0.8
1.0
1.2
1/L1(nm⁻¹)

FIG. 4A

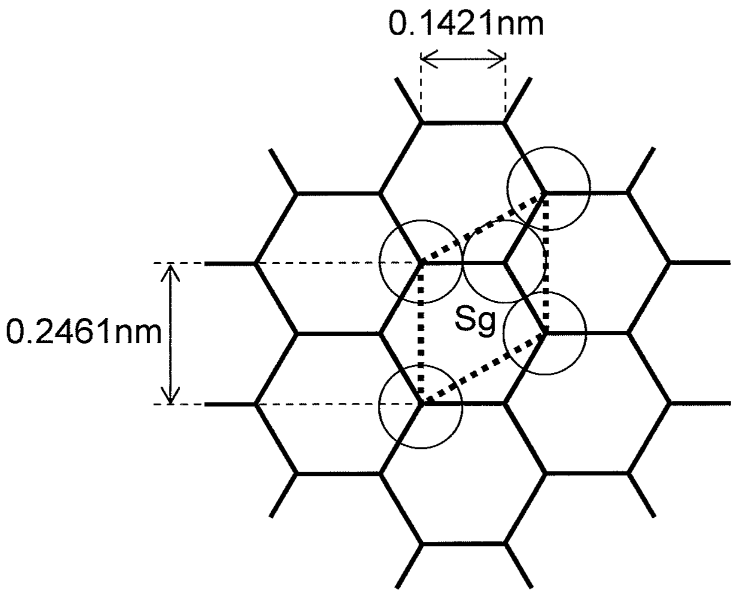


Sg=0.05246nm$^2$

FIG. 4B

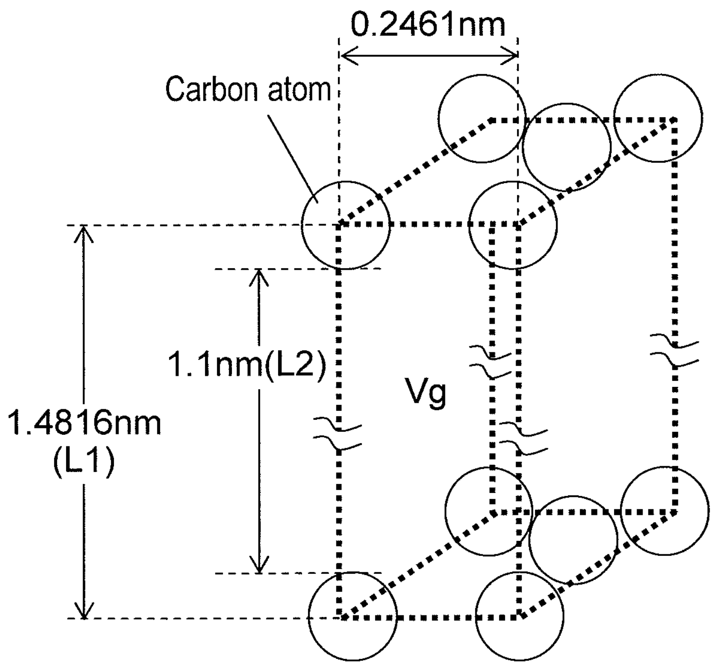


Vg=0.07772nm$^3$

FIG. 5

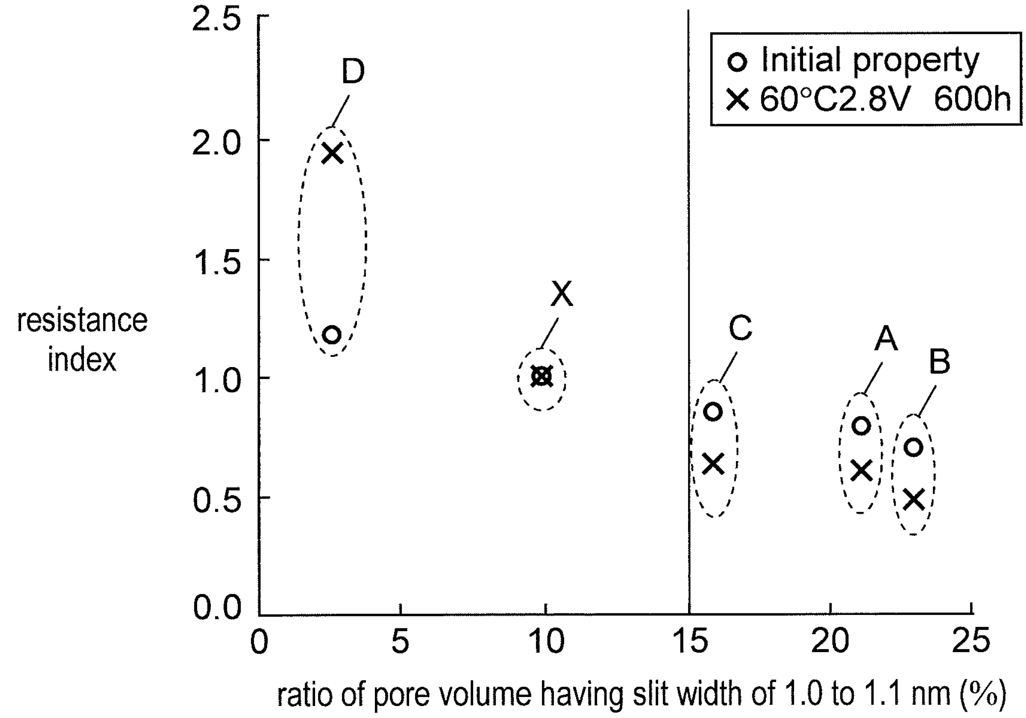
2.5
2.0
1.5
1.0
0.5
0.0
resistance index
D
X
C
A
B
o Initial property
× 60°C2.8V 600h
0
5
10
15
20
25
ratio of pore volume having slit width of 1.0 to 1.1 nm (%)

FIG. 6

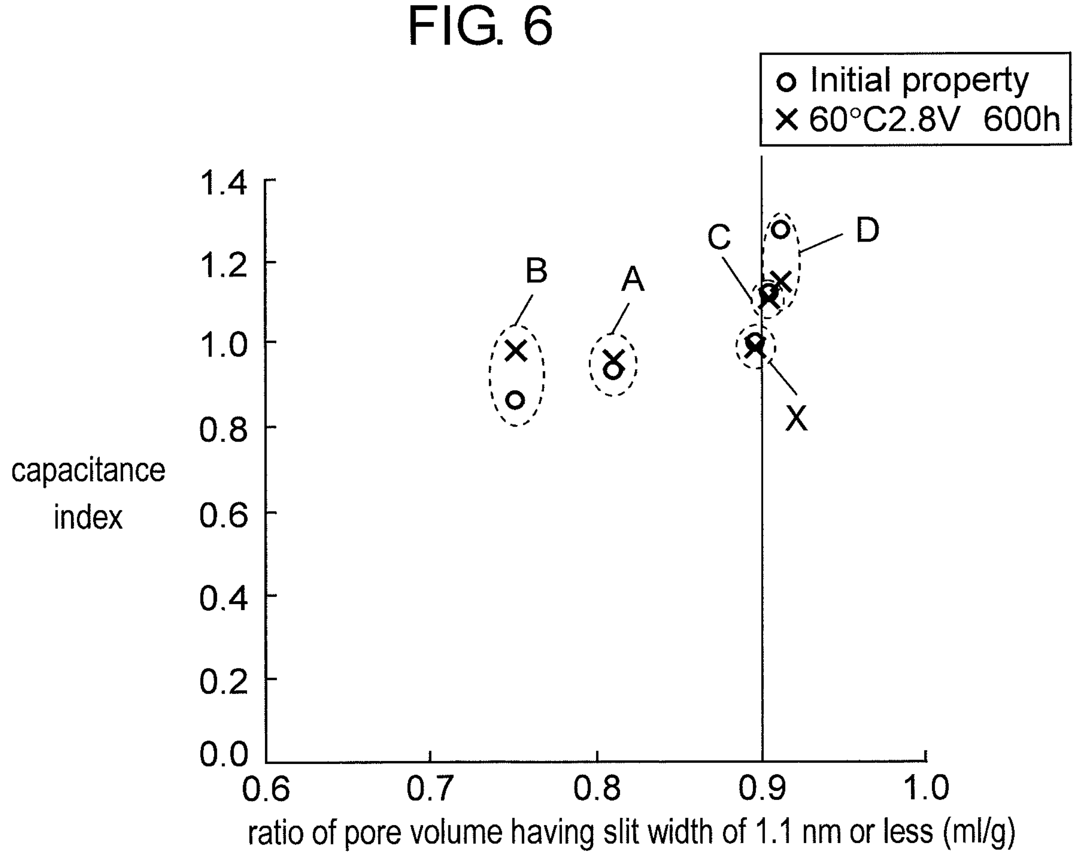
o Initial property
× 60°C2.8V 600h
1.4
1.2
1.0
0.8
0.6
0.4
0.2
0.0
capacitance index
B
A
C
D
X
0.6
0.7
0.8
0.9
1.0
ratio of pore volume having slit width of 1.1 nm or less (ml/g)

FIG. 7

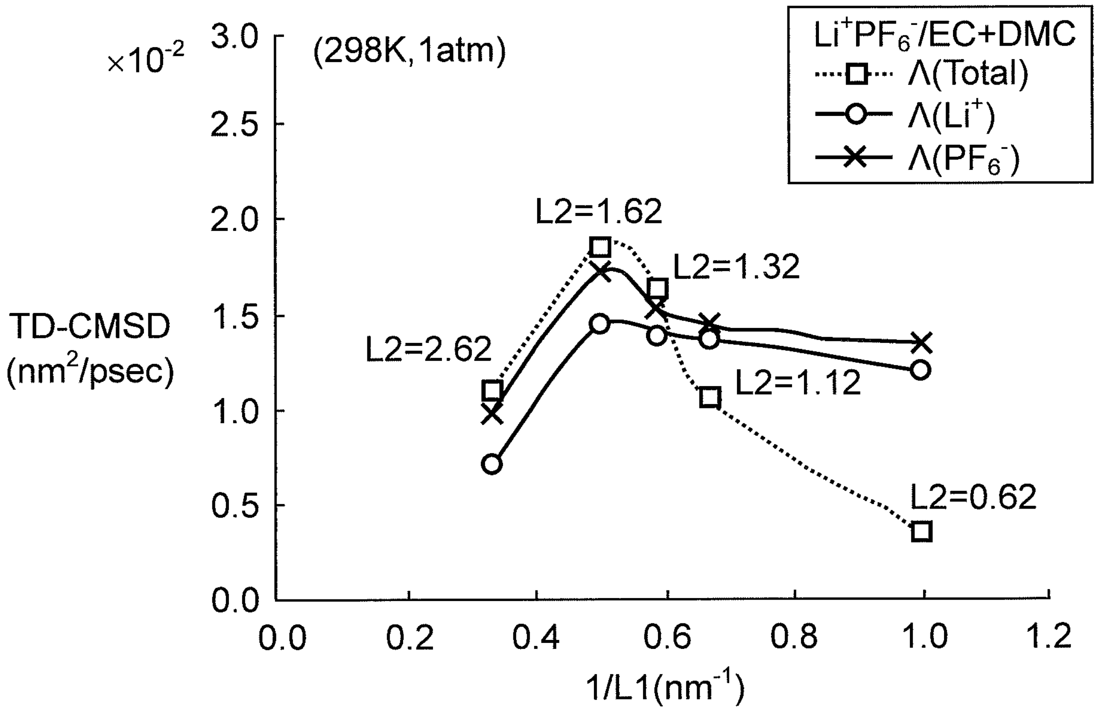

×10-2
3.0
2.5
2.0
1.5
1.0
0.5
0.0
TD-CMSD
(nm2/psec)
(298K,1atm)
Li+PF6-/EC+DMC
Λ(Total)
Λ(Li+)
Λ(PF6-)
L2=1.62
L2=1.32
L2=2.62
L2=1.12
L2=0.62
0.0
0.2
0.4
0.6
0.8
1.0
1.2
1/L1(nm-1)


FIG. 8

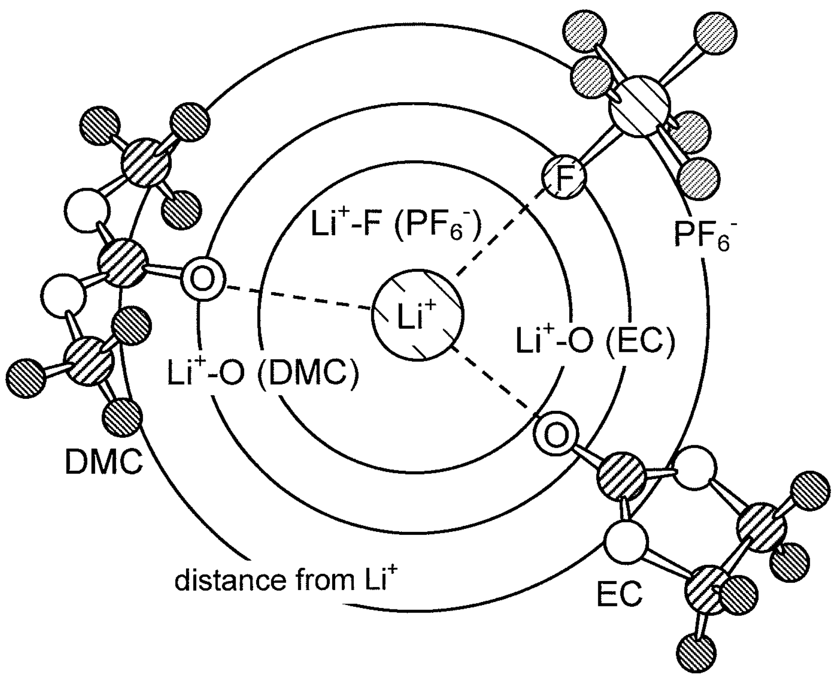

F
Li+-F (PF6-)
PF6-
O
Li+
Li+-O (EC)
Li+-O (DMC)
O
DMC
EC
distance from Li+

FIG. 9A

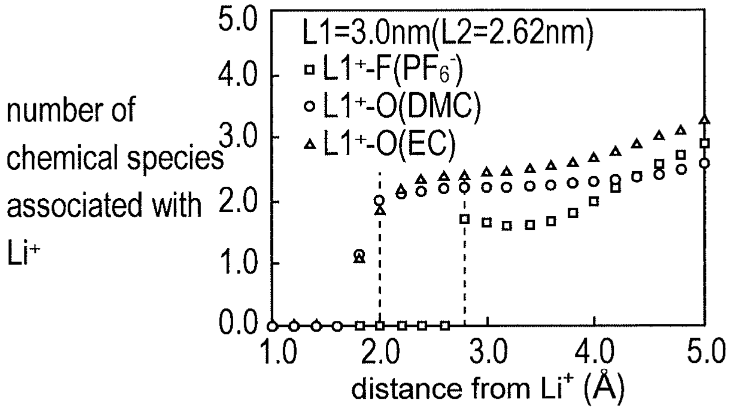


FIG. 9B

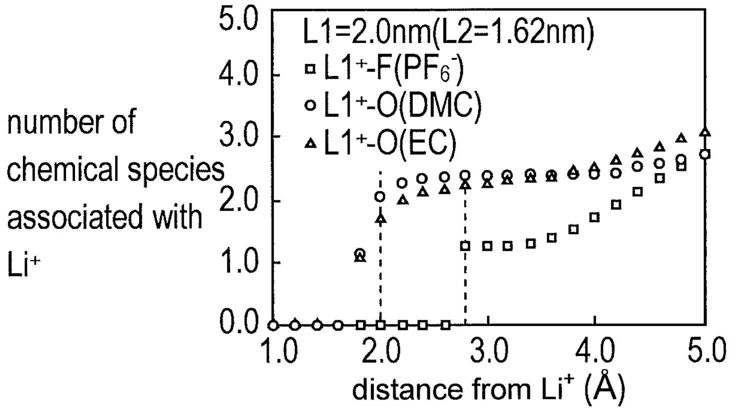


FIG. 9C

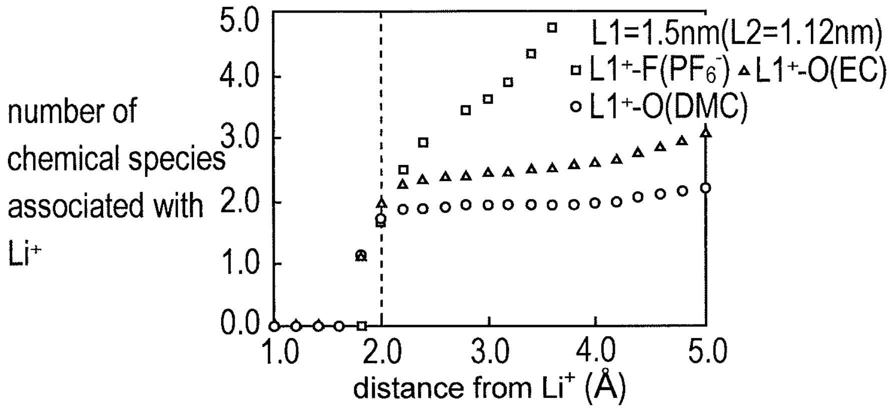


FIG. 9D

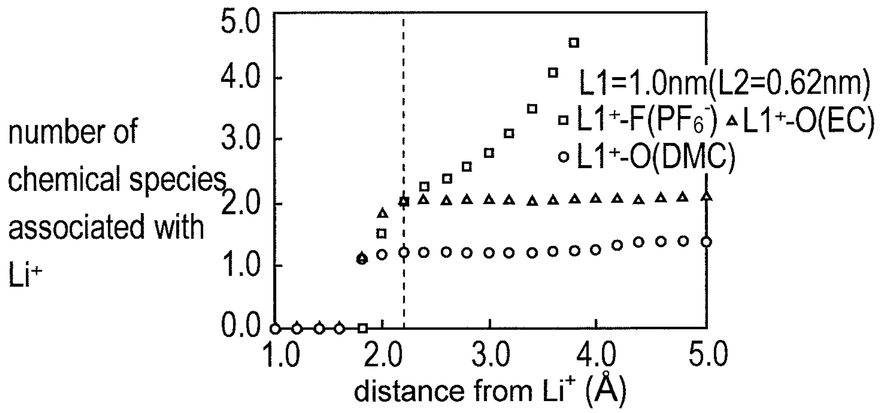

FIG. 10

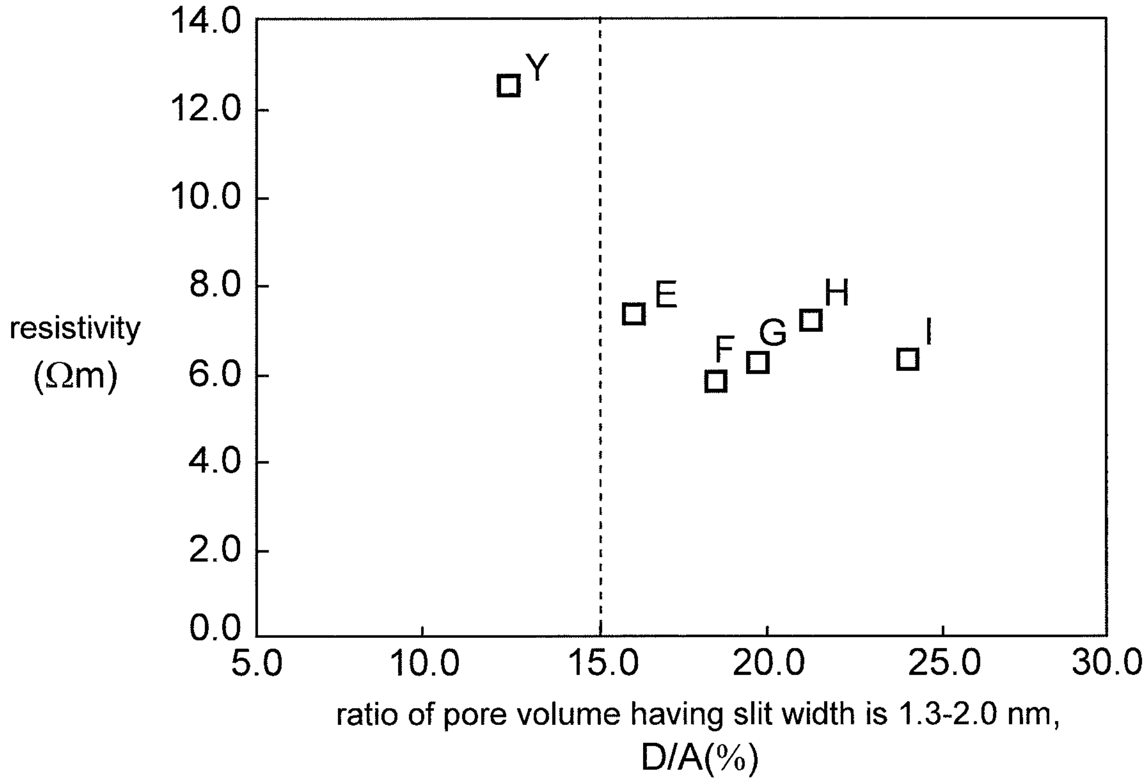
resistivity
(Ωm)
14.0
12.0
10.0
8.0
6.0
4.0
2.0
0.0
5.0
10.0
15.0
20.0
25.0
30.0
Y
E
F
G
H
I
ratio of pore volume having slit width is 1.3-2.0 nm,
D/A(%)

FIG. 11

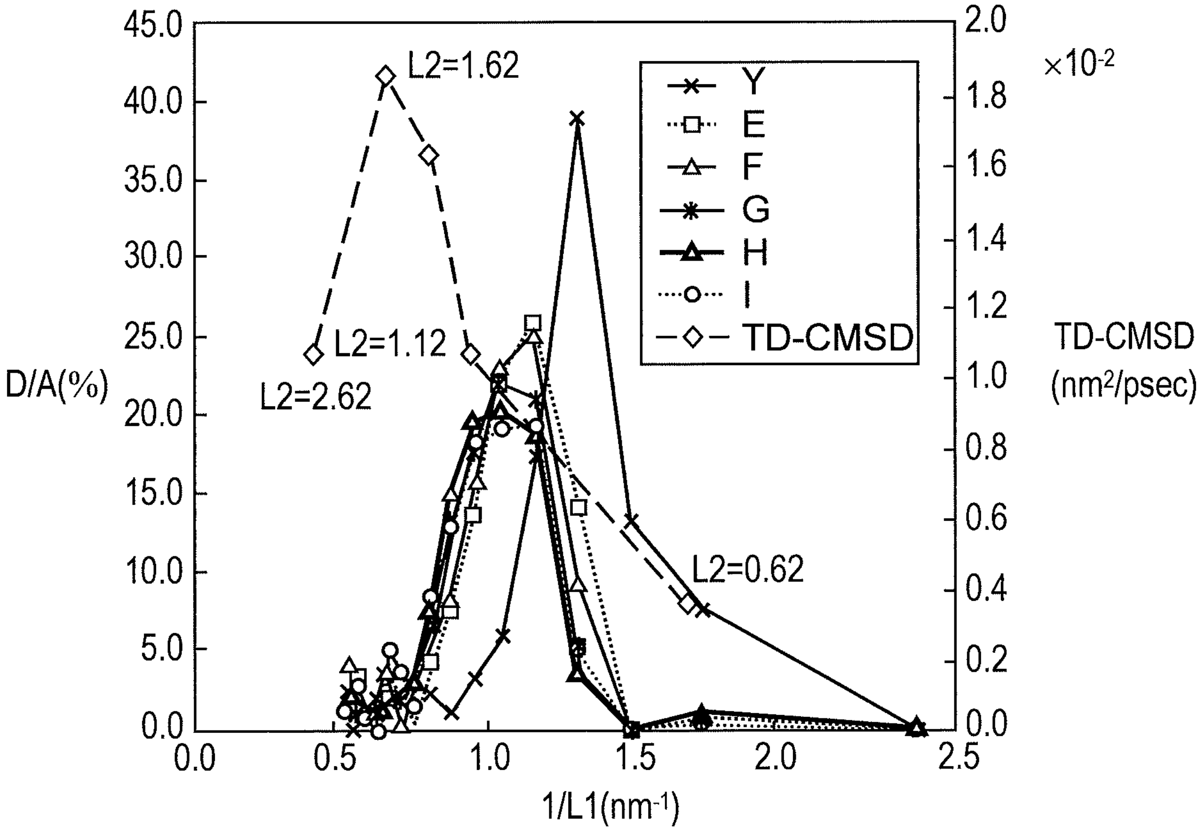
45.0
40.0
35.0
30.0
25.0
20.0
15.0
10.0
5.0
0.0
D/A(%)
0.0
0.5
1.0
1.5
2.0
2.5
1/L1(nm-1)
2.0
1.8
1.6
1.4
1.2
1.0
0.8
0.6
0.4
0.2
0.0
×10-2
TD-CMSD
(nm2/psec)
L2=1.62
L2=1.12
L2=2.62
L2=0.62
Y
E
F
G
H
I
TD-CMSD

**INTERNATIONAL SEARCH REPORT**

International application No.
PCT/JP2010/007248

A. CLASSIFICATION OF SUBJECT MATTER
*H01G9/058*(2006.01)i, *C01B31/08*(2006.01)i, *H01G9/038*(2006.01)i, *H01M4/587*(2010.01)i, *H01M10/0525*(2010.01)i, *H01M10/0568*(2010.01)i, *H01M10/0569*(2010.01)i

According to International Patent Classification (IPC) or to both national classification and IPC

B. FIELDS SEARCHED

Minimum documentation searched (classification system followed by classification symbols)
H01G9/058, C01B31/08, H01G9/038, H01M4/587, H01M10/0525, H01M10/0568, H01M10/0569

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 07-220985 A (Isuzu Motors Ltd.), 18 August 1995 (18.08.1995), claims; paragraphs [0003] to [0038]; fig. 1 to 15 (Family: none) | 1-5,8-10, 12-16,19-21, 23<br>6-7,11, 17-18,22 |
| X<br>Y | WO 2007/066792 A1 (Toyota Motor Corp.), 14 June 2007 (14.06.2007), entire text; all drawings & JP 2007-153660 A | 1-5,8-10, 12-16,19-21, 23<br>6-7,11, 17-18,22 |
| X<br>Y | JP 09-275042 A (Honda Motor Co., Ltd.), 21 October 1997 (21.10.1997), claims; paragraphs [0015] to [0020], [0028], [0032], [0036]; fig. 1 to 17 (Family: none) | 1-5,8-10, 12-16,19-21, 23<br>6-7,11, 17-18,22 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
15 March, 2011 (15.03.11)

Date of mailing of the international search report
29 March, 2011 (29.03.11)

Name and mailing address of the ISA/
Japanese Patent Office

Facsimile No.

Authorized officer

Telephone No.

Form PCT/ISA/210 (second sheet) (July 2009)

**INTERNATIONAL SEARCH REPORT**

International application No.
PCT/JP2010/007248

C (Continuation). DOCUMENTS CONSIDERED TO BE RELEVANT

| Category* | Citation of document, with indication, where appropriate, of the relevant passages | Relevant to claim No. |
|---|---|---|
| X<br><br><br>Y | JP 10-149958 A (Honda Motor Co., Ltd.), 02 June 1998 (02.06.1998), claims; paragraphs [0012] to [0014], [0026] to [0031], [0042], [0049] to [0059]; fig. 2 & US 5877935 A | 1-5,8-10, 12-16,19-21, 23<br>6-7,11, 17-18,22 |
| X<br><br><br>Y | JP 63-187614 A (Elna Co., Ltd.), 03 August 1988 (03.08.1988), claims; page 2, lower left column, lines 1 to 11; page 3, upper left column, line 1 to page 4, lower right column, line 6 (Family: none) | 1-5,8-10, 12-16,19-21, 23<br>6-7,11, 17-18,22 |
| X<br><br><br>Y | WO 2004/019356 A1 (Nisshinbo Industries, Inc.), 04 March 2004 (04.03.2004), entire text; all drawings & JP 4548592 B & US 2006/0176646 A1 & EP 1536440 A1 & CA 2496544 A & AU 2003262276 A & KR 10-2005-0056971 A & CN 1679126 A | 1-5,8-10, 12-16,19-21, 23<br>6-7,11, 17-18,22 |
| Y | JP 2005-197666 A (Sanyo Chemical Industries, Ltd.), 21 July 2005 (21.07.2005), claims; paragraph [0064] & US 2005/0127319 A1 & US 2006/0118755 A1 & EP 1542248 A2 & KR 10-2005-0056868 A & CN 1627460 A & TW 286332 B | 6-7,17-18 |
| Y | JP 2006-286923 A (Fuji Heavy Industries Ltd.), 19 October 2006 (19.10.2006), claims; paragraphs [0049] to [0050] (Family: none) | 11,22 |
| E,X | WO 2009/157162 A1 (Panasonic Corp.), 30 December 2009 (30.12.2009), entire text; all drawings (Family: none) | 1-23 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007320842 A
- JP 2006286923 A
- JP 2005197666 A
- JP 2008147283 A


### Non-patent literature cited in the description


- **R. SH. MICHAIL et al.** *J. Coll. Inter. Sci.,* 1968, vol. 26, 45
- **A. BONDI.** *J. Phys. Chem.,* 1964, vol. 68, 441
- **W. D. CORNELL ; P. CIEPLAK ; C. I. BAYLY ; I. R. GOULD ; K. M. MERZ JR. ; D. M. FERGUSON ; D. C. SPELLMEYER ; T. FOX ; J. W. CALDWELL ; P. A. KOLLMAN.** *J. Am. Chem. Soc.,* 1995, vol. 117, 5179
- **C. I. BAYLY ; P. CIEPLAK ; W. D. CORNELL ; P. A. KOLLMAN.** *J. Phys. Chem.,* 1993, vol. 97, 1026
- **W. A. STEELE.** *Surface Science,* 1973, vol. 36, 317
- **R. KUBO.** *J. Phys. Soc. Jpn.,* 1957, vol. 12, 570